# EUROPEAN PATENT SPECIFICATION

(11) **EP 4 696 099 B1**
(45) Date of publication and mention of the grant of the patent: **20.05.2026**
(21) Application number: 24755280.5
(22) Date of filing: 13.08.2024
(51) Int. Cl.: H04W 88/08

(54) **FLEXIBLE LAYER GROUPING FOR FRONTHAUL CONTROL PLANE MESSAGING**
FLEXIBLE SCHICHTGRUPPIERUNG FÜR FRONTHAUL-STEUEREBENENNACHRICHTENÜBERMITTLUNG
REGROUPEMENT DE COUCHES FLEXIBLE POUR MESSAGERIE DE PLAN DE CONTRÔLE FRONTHAUL

(30) Priority: 15.08.2023 US 202363519693 P
(43) Date of publication of application: 18.02.2026
(73) Proprietor: Telefonaktiebolaget LM Ericsson (publ), 164 83 Stockholm (SE)
(72) Inventor: VDOVIN, Lev, 168 44 BROMMA (SE); LU, Chenguang, 191 63 SOLLENTUNA (SE); HEIMGÅRD, Stefan, 245 62 HJÄRUP (SE); HENNERT, Lars, 163 46 SPÅNGA (SE); RAJASEKARAN, Aditya Sriram, Ottawa, Ontario K2V 0R5 (CA); POHLMAN, Björn, 175 51 JÄRFÄLLA (SE)
(74) Representative: Ericsson
(86) International application number: PCT/EP2024/072783
(87) International publication number: WO 2025/036893

(56) References cited:
- WO-A1-2023/287546
- US-A1- 2023 066 247
- US-A1- 2023 112 049
- US-A1- 2023 217 422
- ANONYMOUS: "O-RAN.WG4.CUS.0-v07.02 O-RAN Working Group 4 (Open Fronthaul Interfaces WG) Control, User and Synchronization Plane Specification", 31 May 2022 (2022-05-31), pages 1 - 319, XP009551241, Retrieved from the Internet <URL:https://orandownloadsweb.azurewebsites.net/specifications>

## Description

### TECHNICAL FIELD

The present disclosure relates to wireless communications, and in particular, to performing layer grouping for fronthaul control plane (C-plane) messaging in wireless communication networks.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs. The 3GPP is also developing standards for Sixth Generation (6G) wireless communication networks. Further, the Open Radio Access Network (ORAN) alliance is a world-wide community that has developed and is developing international standards, guides and recommendations associated with wireless communication systems such as 5G, LTE, etc.

Massive multiple input multiple output (MIMO) techniques have been first adopted to practice in LTE. In 5G, it becomes one key technology component, which may be deployed on a much larger scale than in LTE. MIMO features a large number of antennas used on the network node side (e.g., base-station side), where the number of antennas is typically much larger than the number of user-layers. For example, 64 antennas serving 8 or 16 user-layers may be used in frequency range 1 (FR1), which comprises sub-6 GHz frequency bands. Further, 256/512 antennas serving 2 or 4 layers may be used in FR2, which comprises frequency bands from 24.25 GHz to 71 GHz. The term user layer may be used in the present disclosure and may refer to an independent downlink or uplink data stream intended for one user. One user or WD (e.g., UE) may have one or multiple user layers. User layer is also referred to as layer, e.g., in 3GPP terminology. Massive MIMO is also referred to as massive beamforming, which is able to form narrow beams focusing on different directions to counteract against the increased path loss at higher frequency bands. It also benefits multi-user MIMO which allows for transmissions from/to multiple users simultaneously over separate spatial channels resolved by the massive MIMO technologies, while keeping high capacity for each user. Therefore, it can significantly increase the spectrum efficiency and cell capacity.

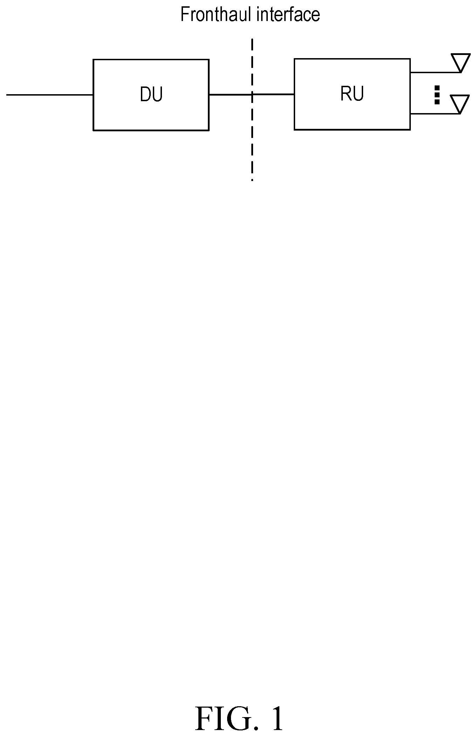

At the network node side (e.g., base-station side), the interface between the distributed unit (DU) and the radio unit (RU) is the fronthaul interface, as shown in FIG. 1. The benefits of massive MIMO at the air-interface also introduce new challenges at the network node side (e.g., base-station side). The legacy Common Public Radio Interface (CPRI) type fronthaul transports time-domain in-phase and quadrature (IQ) samples per antenna branch. As the number of antennas scales up in massive MIMO systems, the required fronthaul capacity also increases proportionally, which significantly drives up the fronthaul costs. To address this challenge, the fronthaul interface evolves from CPRI to evolve CPRI (eCPRI), a packet-based fronthaul interface. In eCPRI, other functional split options between a DU and a RU are supported, referred to as different lower-layer split (LLS) options. In the eCPRI standard specification, the terms eCPRI Radio Equipment Control (eREC) and eCPRI Radio Equipment (eRE) are used instead of DU and RU. The basic idea is to move the frequency-domain beamforming function from DU to RU so that frequency samples or data of user-layers are transported over the fronthaul interface. The frequency-domain beamforming is sometimes also referred to as precoding in the downlink (DL) direction and equalizing or pre-equalizing in uplink (UL) direction. By doing this, the required fronthaul capacity and thereby the fronthaul costs may be reduced, as the number of user layers is typically much fewer than the number of antennas in massive MIMO. In Open Radio Access Network (O-RAN), DU is referred to as O-DU while RU is referred to as O-RU.

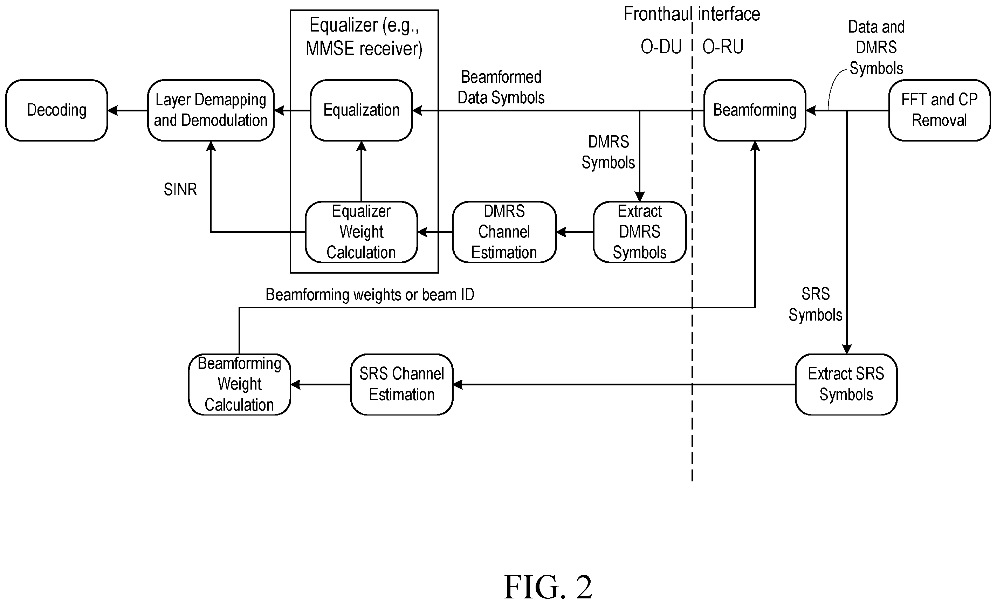

FIG. 1 shows an example fronthaul interface between RU and DU. FIG. 2 shows the UL Weight-based Dynamic Beamforming (WDBF) implementation supported by the current O-RAN work group 4 (WG4) specification. By having the beamforming function in the O-RAN RU (O-RU), the number of streams going through the fronthaul interface becomes smaller than the number of antenna branches. However, the beamforming weights are calculated in the O-RAN DU (O-DU) based on the Sounding Reference Signal (SRS) signal sent back from the O-RU. Since the SRS channel estimates correspond to an earlier channel, the required number of streams is still much larger than the number of layers to avoid performance loss, compared to that using CPRI-based fronthaul. There is a tradeoff between the number of streams used and the performance.

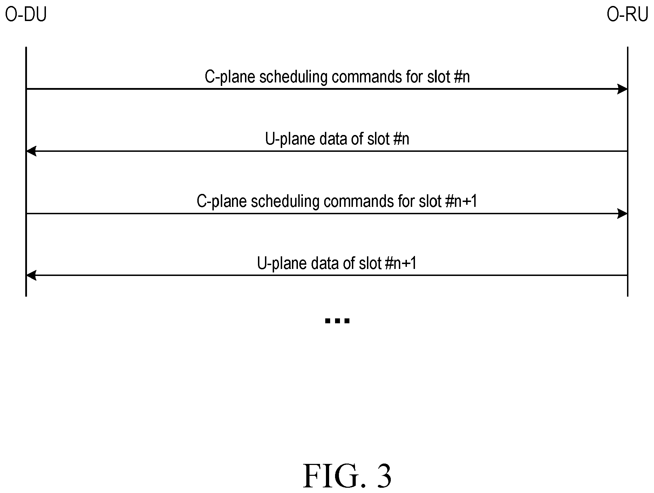

FIG. 3 shows the control-plane (C-plane) and user-plane (U-plane) data flow for WDBF. For every slot, the O-DU sends first C-plane messages to convey the scheduling information to the O-RU. The scheduling information includes the Resource Elements (REs) to be scheduled, the beam identifier (ID) (referred as beamId in the specification) which represents the beamforming weights pre-stored in the O-RU, the beamforming weights (BFWs) to be used. The O-RU receives the scheduling information and then processes the scheduled REs according to the scheduling information received, e.g., perform beamforming (i.e., apply the beamforming weights received directly or indicated by the beam ID received) for the scheduled REs. Then, the O-RU sends the processed REs (i.e., U-plane data) in U-plane messages to the O-DU.

There is another type of beamforming methods defined in the current O-RAN WG4 specification, referred to as Channel Information based Beamforming (CIBF). In CIBF, instead of transferring BFWs or beamId, the O-DU transfers to the O-RU the scheduled layers and the SRS channel estimates of the scheduled layers in the C-plane messages. The O-RU uses the received information (i.e., the scheduled REs, the scheduled layers and their channel estimates for the scheduled REs) to calculate the BFWs and perform beamforming to the scheduled REs using the calculated BFWs. Then the O-RU sends the processed REs (i.e., U-plane data) in U-plane messages to the O-DU. In the specification, each scheduled layer is conveyed by a field called "ueId" in C-plane message. Although the field name is "ueId", the ueId represents a layer, not a WD (e.g., UE). For a WD (e.g., UE) with multiple layers scheduled, it needs multiple ueId(s) where each ueId represent one layer of the WD (e.g., UE).

In the O-RAN WG4 open-fronthaul control user synchronization (CUS) specification, O-RAN CU plane (control plane and user plane) distinguishes logical data flows on transport level, based on the extended Antenna-Carrier (eAxC) identifier (ID) presented in the eCPRI transport header of the C- and U-plane message. It allows distinguishing RU's logical flows, representing spatial streams (e.g. beamformed data stream), in some cases, data layers.

In the current O-RAN WG4 open-fronthaul CUS specification, a C- or U-plane message is usually related to one eAxC ID value on transport level, presented in the eCPRI transport header. However, it also supports the possibility to use one C plane message to represent multiple layers, when multiple layers share the same C-plane information. For example, the multiple layers are scheduled on the same resource elements (REs). It is more efficient to use one C-plane message to send the RE information one time for all associated layers, instead of repeating the same RE information using multiple C-plane messages sent multiple times. In this invention, this method is referred to as layer grouping for C plane messaging. Layer grouping is useful for single-user MIMO (referred to as SU-MIMO) and multi-user MIMO (referred to as MU-MIMO), where multiple layers are scheduled on the same REs.

In the O-RAN WG4 open-fronthaul CUS specification, layer grouping is supported by introducing a new type of eAxC ID referred to as group eAxC ID in management plane (M-plane). A group eAxC ID is defined to represent a list of eAxC IDs (i.e., multiple eAxC IDs) which are referred to as the member eAxC ID of the group eAxC ID. The group eAxC ID and its member eAxC IDs are defined by O-DU via M-plane. In this way, one C-plane message can refer to a group eAxC ID to carry the scheduling information (e.g., RE information) for all its member eAxC IDs. In addition to the common scheduling information of all layers (associated to the member eAxC IDs) represented by the group eAxC ID in one C-plane message, Section Extension 10 (SE10) can be used to convey ueId per layer, beamId per layer, or beamforming weights per layer, which are layer specific.

In O-RAN open fronthaul, a C or U plane message contains an eCPRI transport header, in which the "ecpriRtcid / ecpriPcid" field represents the eAxC ID used. A C or U plane message further contains one or more sections using a specific Section Type. Multiple Section Types are defined to carry different types of scheduling information for different purposes. For example, Section Type 0 (ST0) is used to represent unused resource blocks or symbols. Section Type 1 (ST1) is used to represent used (scheduled) resource elements (REs) for most DL/UL channels, e.g., Physical Uplink Shared Channel (PUSCH), Physical Downlink Shared Channel (PDSCH), etc., when WDBF is used. Each section can be attached with one or more Section Extensions. Each Section Extension attached includes additional information than that described by the section. For example, Section Extension 1 (SE1) is used to provide beamforming weights. Section Extension 4 (SE4) is used to provide modulation compression parameters. Section Extension 10 (SE10) is used to provide beamforming weights or ueIds when port (or layer) grouping is used.

O-RAN WG4 has been investigating to improve the current specification by introducing a new beamforming method referred to as demodulation reference signal (DMRS) based beamforming (DMRS-BF) to achieve the best performance using the minimum fronthaul bit rate, i.e. reducing the number of streams to the number of layers. There are two implementation variants of DMRS-BF solutions that will be standardized in O-RAN WG4. The first variant is referred to as DMRS based beamforming with equalization (DMRS-BF-EQ), where equalization is performed in O-RU. The second variant is referred to as DMRS based beamforming without equalization (DMRS-BF-NEQ), where equalization is not performed in O-RU.

In wireless communication, an equalizer performs an equalization operation on the input signal, which reverses the distortion caused by the end-to-end channel including the transmitter chain, the over-the-air channel (including the wanted channel and the interference channel), and the receiver chain. After the equalization, the equalized symbols can be demodulated by a demodulator. When the input signal is from multiple transmitters which send different data, the equalizer may also mitigate the interferences between them. Equalizers can be linear or non-linear. Examples of linear equalizers are zeroforcing equalizer, Minimum Mean Squared Error (MMSE) equalizer etc. Examples of non-linear equalizers are decision-feedback equalizer (DFE), successive interference cancellation (SIC) receiver etc.

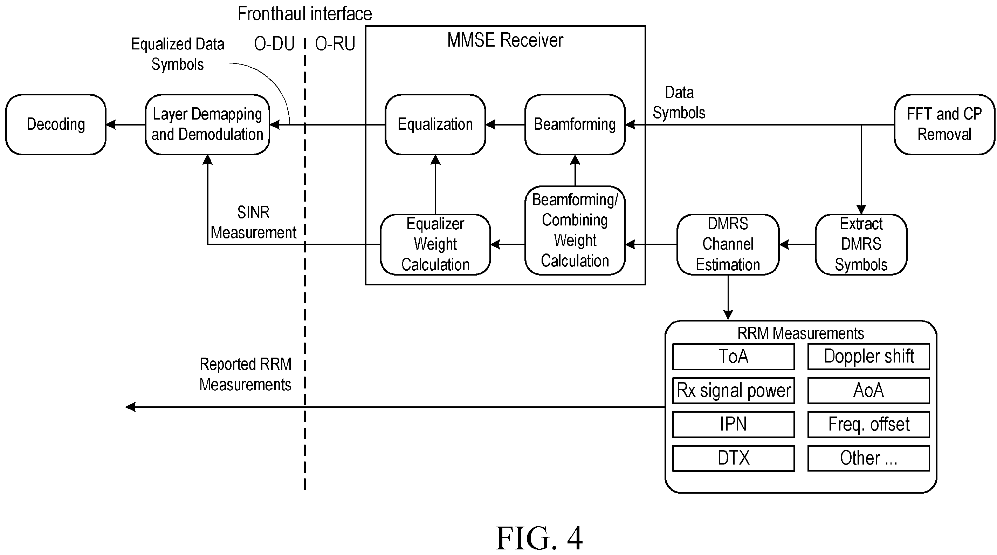

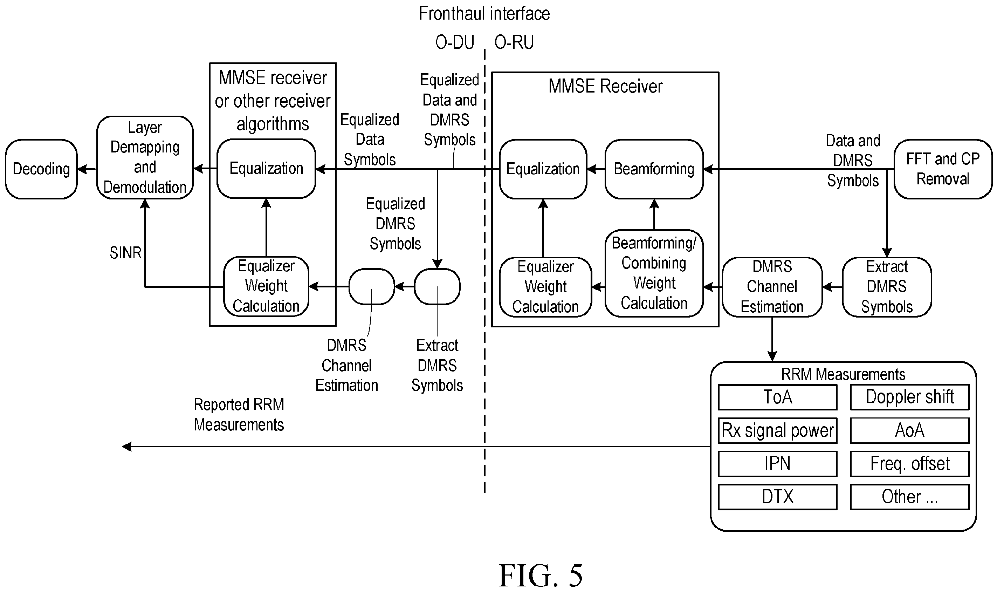

The DMRS-BF-EQ variant has two implementation sub-variants. FIG. 4 shows the first implementation sub-variant, in which the O-DU does not perform an additional equalization. In addition to the equalized data symbols, the O-RU sends the signal to interference and noise ratio (SINR) measurement from the O-RU to the O-DU which are used by the O-DU to demodulate the equalized symbols. The SINR measurement represents the measured/estimated SINR values, e.g., per physical resource block (PRB) or finer frequency resolution per layer, which is used by the demodulator for demodulation of the symbols of each resource element (RE) per layer, e.g., the demodulation algorithm based on log likelihood ratio (LLR). The equalized data symbols are often referred to as soft values in demodulation terminology. FIG. 5 shows the second implementation sub-variant, in which the O-DU performs an additional equalization. This sub-variant is intended to support advanced receiver algorithms (e.g., successive interference cancellation (SIC) receiver, interference rejection combining coordinated multi-point transmission and reception (IRC-CoMP) receiver, etc.) which need channel estimates in the O-DU. In this subvariant, O-RU sends both equalized data symbols and equalized DMRS symbols which are equalized in the same way as the equalized data symbols. The O-DU will use the received equalized DMRS to estimate the effective channel including air interface channel and the O-RU processing (e.g., equalization done by the O-RU). Then, the effective channel estimates are used to further process the data symbols.

As shown in FIGS. 4 and 5, for both subvariants of DMRS-BF-EQ, O-RU may send Radio Resource Management (RRM) measurements which are calculated or measured before beamforming and equalization. These measurements cannot be calculated in the O-DU. That is why these measurements are calculated by the O-RU and sent to the O-DU. Some examples of the RRM measurements are listed below.
∘ Estimate of time of arrival (ToA) of WD (e.g., UE) signal: this is used for WD Timing Advance (TA). This measurement is one ToA value per WD (e.g., UE).
∘ Estimate of received signal power of WD (e.g., UE): this is used for WD closed loop power control. This measurement is one value per WD.
o Interference plus noise (IPN) power measurement: O-RU calculates the power of received interference and noise per PRB. This is useful for the scheduler in the O-DU to optimize scheduling decisions. There are two kinds of IPN measurements, i.e., IPN for the allocated PRBs and the non-allocated PRBs, respectively. The allocated PRBs are the PRBs scheduled for WD (e.g., UE) traffic, while the non-allocated PRBs are the PRBs that have not WD traffic scheduled. This measurement can be one value per PRB or one value per PRB per symbol.
∘ Discontinuous Transmission (DTX) detection result: better DTX detection performance can be achieved by the O-RU. This measurement is a one-bit value per WD (e.g., UE).

In addition to the list above, other possible RRM measurements (such as delay spread, frequency offset, doppler shift, angle of arrival (AoA)) are also beneficial to support.

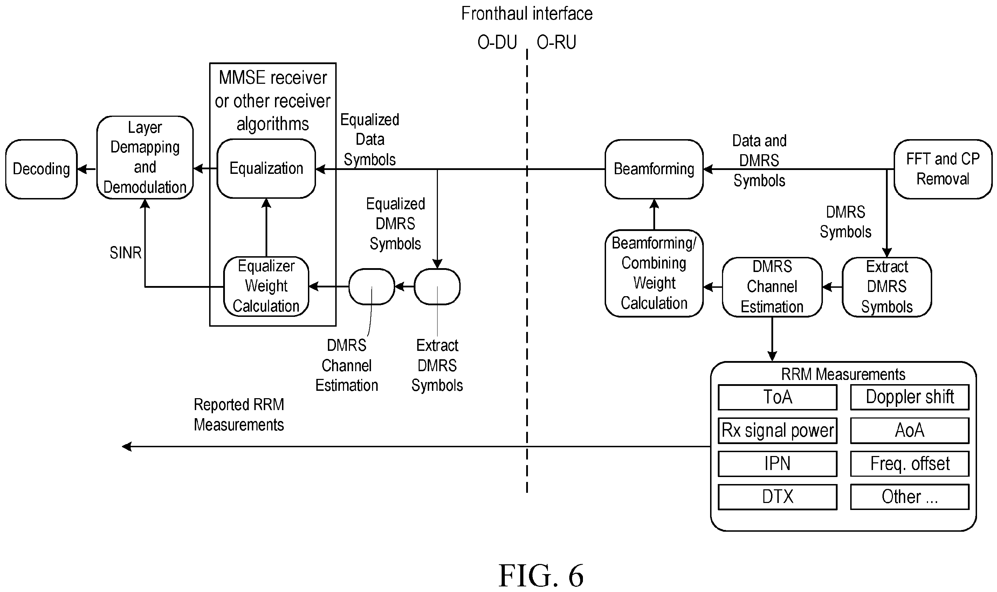

FIG. 6 shows the implementation of DMRS-BF-NEQ. In this case, the O-RU only performs beamforming without doing equalization. The O-RU sends both beamformed data symbols and beamformed DMRS symbols which are beamformed in the same way as the beamformed data symbols. The O-DU may use the received beamformed DMRS to estimate the effective channel including air interface channel and the O-RU processing (e.g. beamforming done by the O-RU). Then, the effective channel estimates are used to perform the equalization. As described for DMRS-BF-EQ, the DMRS-BF-NEQ implementation can be also beneficial to have some radio resource management (RRM) measurements, especially those that cannot be or are better to be calculated by the O-DU from the received beamformed DMRS symbols.

Table 1 shows the granularity of the RRM measurements listed previously and whether they are supported mandatorily or optionally for DMRS-BF-EQ or DMRS-BF-NEQ.

**Table 1 - Mandatory or optional O-RU measurement support. The term UE in Table 1 may refer to a WD.**

| **RRM measurement** | **Granularity** | **O-RU using DMRS-BF-EQ** | **O-RU using DMRS-BF-NEQ** |
|---|---|---|---|
| **ToA** | One value per UE per slot | Mandatory | Optional |
| **RX signal power** | One value per UE per slot | Mandatory | Optional |
| **IPN** | Frequency: per PRB Time: per slot or finer | Mandatory | Optional |
| **DTX detection** | One value (1-bit) per UE per slot | Optional | Optional |

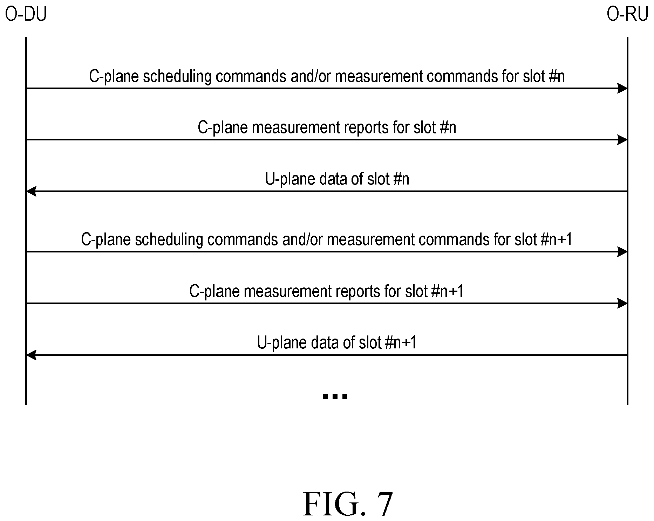

The beamforming method of DMRS-BF (i.e., DMRS-BF-EQ and DMRS-BF-NEQ variants) also has an impact to the UL C-plane and U-plane data flows, as shown in FIG. 7, because of the support of measurement transferring. For DMRS-BF C-plane, new C-plane signaling between O-RU and O-DU is needed to provide the necessary information from O-DU to O-RU to perform DMRS-based beamforming (with or without equalization, i.e., DMRS-BF-EQ or DMRS-BF-NEQ) and the necessary measurements from O-RU to O-DU to assist O-DU PUSCH (Physical Uplink Shared Channel) processing and RRM operations. From O-DU to O-RU, in addition to the information regarding the scheduled REs, the scheduling information need to contain DMRS configuration to be used and WD information representing the WDs and WD layers scheduled, as well as the measurement control. From O-RU to O-DU, the RRM measurements are transferred in C-plane messages, in addition to the U-plane messages.

As described previously, the beamforming methods of DMRS-BF-EQ and DMRS-BF-NEQ require scheduling information and measurement data conveyed in C-plane. One example of scheduling information is DMRS configuration. The following lists the DMRS configuration parameters.
- Common parameters for Cyclic Prefix Orthogonal Frequency Division Multiplexing (CP-OFDM) and Discrete Fourier Transform-spread OFDM ( DFT-S-OFDM) are listed below:
   o Single- or Double-symbol DMRS;
   o Symbol pattern/mask (time-domain mapping);
   o Antenna port;
   o Release 15 or 16 sequences to be used;
   o Transform precoding is used or not. DFT-S-OFDM uses transform coding or CP-OFDM doesn't use.
- Specific parameters for CP-OFDM and DFT-S-OFDM with π/2-BPSK modulation (Release 16) are listed below:
   o DMRS Type 1 or Type 2;
   o Scrambling ID (*N*_ID ^(*n*_SCID));
   o Scrambling Id Number (*n*_SCID).
- Specific parameters for DFT-S-OFDM are listed below:
   o Reference Symbol Generation Identity (*n*_*ID*^*RS*); and
   o Hopping configuration (no hopping, group hopping or sequence hopping).

Most of the DMRS configuration parameters above are WD specific. That is, these parameters may not be the same for the WDs in the same multi-user (MU) group which contains the WDs scheduled on the same REs with MU-MIMO. The following lists some examples in which the WDs can use different parameters.
- WDs in different code-division multiplexing (CDM) groups can use different configuration parameters. It is because the DMRS of WDs in different CDM groups use different REs. Therefore, they can use different configurations parameters since they don't need to use the same sequence to keep the orthogonality.
- WDs in one CDM group use transform precoding, while WDs in another CDM group do not use transform precoding.
- WDs in one CDM group use Release 15 sequences, while WDs in another CDM group use Release 16 sequences.
- WDs in different CDM groups can use different N_ID ^(*n*_SCID), *n*_SCID, *n_ID*^*RS.*
- WDs in the same CDM groups can use different *n*_SCID.

Therefore, the DMRS configuration is not MU group specific. All parameters but antenna port can be seen as WD specific.

The default layer grouping method supported by the current O-RAN WG4 open-fronthaul CUS specification (i.e. using SE10 in which the beamGroupType field value is set to 10b) is not suitable for conveying the WD-specific DMRS configuration parameters within a MU group. The current layer grouping method assumes configuration is applied for first N layers (i.e. eAxC IDs) in the group, according to member's eAxC ID order, configured via M-plane. Once scheduling command is executed, group eAxC ID is not supposed to be used anymore to schedule different configuration for other layers of the same resources in the same slot. So, it has to have a group eAxC ID per WD. For the number of eAxC IDs supported, e.g., 8 or 16, it would need too many group eAxC IDs (i.e., combinations of eAxC IDs) to cover all cases, e.g., a WD has 1, 2, 3, or 4 layers. Therefore, for DMRS configuration, the current layer grouping method is only efficient if the same DMRS configuration is used by all WDs in the same MU group.

If layer grouping is not used, DMRS configuration may be conveyed per layer per C-plane message. However, for SU-MIMO where the same configuration is used, redundant information is to be sent in case of per-layer C-plane messaging, which will introduce larger signaling overhead. In addition, in a MU group, one UE (i.e., WD) can have multiple layers scheduled, together with the layers of other UEs (i.e., WDs).

Furthermore, if C-plane messages are used to transport measurement data from O-RU to O-DU, absence of layer grouping results in larger number of uplink messages, with large headers overhead, i.e., more complicate processing on the O-DU, since in some cases, information related to all layers is to be collected, for further data processing. In this case, SE10 can be used to group data, related to all layers, where resources were scheduled. However, such grouping does not allow to report separately measurements, related to e.g., different WD, which may constrain WD specific processing capabilities.

The O-RAN WG4 open-fronthaul CUS specification also defines a feature for CIBF to improve the default layer grouping method described above (i.e. SE10 in which the beamGroupType field value is set to 10b). This feature is used If O-RU declares supporting this feature and O-DU configures to use this feature. For CIBF, SE10 conveys UE IDs to be used for each eAxC ID in the eAxC ID group. The feature defines a special UE ID value of 0x7FFF. If the special UE ID value is set by O-DU for any eAxC ID in the eAxC ID group, it means that this eAxC ID is not used. It creates a way to indicate unused eAxC ID. However, the SE10 still needs to refer to the first eAxC IDs in the group. When the eAxC ID group size is large, this method can be very inefficient. For example, if the eAxC ID group size is 64, only 1 layer is used and this layer is assigned to the 32th eAxC ID in the group, this method will create a SE10 with 32 entries in which the UE ID value of the first 31 entries are set to the special value indicating the first 31 eAxC IDs are not used, and only the UE ID value of the last entry (i.e. the 32th entry) conveys the useful information. Therefore, this method is inefficient for large group size of eAxC ID group, which is an important use case for DMRS-BF. This method also increases the O-RU complexity that the O-RU has to go through the full list of the eAxC ID group to determine which eAxC IDs are used.

In US 2023/217422 A1 (SACHIDANAND SINHA ABHISHEK SAURABH [US] ET AL) 6 July 2023 (2023-07-06), a two-step flow, involving a Management-plane capability exchange and a Control-plane slot-level configuration, is introduced that lets the DU centrally dictate TDD/idle patterns and analogue/TD beam settings for a whole slot, while the RU applies them.

In WO 2023/287546 A1 (QUALCOMM INC [US]) 19 January 2023 (2023-01-19), the RU first advertises every endpoint group and its port count and the DU assigns each RU port a composite eAxC identifier made of a group index plus intra-group index(fixed-field or mask-encoded) and may signal that choice back to the RU. All subsequent C/U/M/S-plane packets carry this identifier.

In O-RAN.WG4.CUS.O-vO7.02 O-RAN Working Group 4, (Open Fronthaul Interfaces WG) Control, User and Synchronization Plane Specification, O-RANTECHNICAL SPECIFICATION, O-RAN WORKING GROUP 4, 31 May 2022 (2022-05-31), pages 1-319, XP009551241, following Management-plane setup, the O-DU drives the O-RU in real time via C-plane packets that carry per-symbol scheduling and beamforming commands, dispatched a fixed lead-time before each slot. IQ data then follows in separate U-plane frames, with sequence-ID rules letting each end detect loss or re-ordering.

In US 2023/066247 A1 (RAEESI OROD [Fl] ET AL) 2 March 2023 (2023-03-02), after an initial Management-plane step in which the O-RU groups every non-layer-0precoding stream under the layer-O eAxC ID for a UE, the O-DU controls down-link precoding by inserting those eAxC IDs into Section-Type 1/3 C-plane packets: one ExtType 3 "first-data-layer" message with the layer-0 eAxC declares the total number of layers, and subsequent ExtType 3 "non-first-layer" messages reference only the associated AxC IDs. On receipt, the RU consults the pre-established mapping, merges the layer-0and non-layer identifiers, and precodes the corresponding U-plane resource blocks for all scheduled RBs, slots and carriers without, re-using the same mapping for later UEs in the slot.

In US 2023/112049 A1 (HU YU HAN [CN] ET AL) 13 April 2023 (2023-04-13), the RU first reports, per endpoint, whether it supports the "re-usable control information set" (RCIS) section extension and how many such sets it can hold. The DU verifies these limits against slot/symbol quotas and, whenever a periodic or semi-persistent channel or signal is created, changed or released, it transmits a single C-plane message whose RCIS extension states the operation type, a unique RCIS ID and the reuse period. The RU stores or updates the RCIS and thereafter re-applies it each cycle to receive uplink data or process downlink U-plane frames, invoking priority rules only if an on-the-fly section and an RCIS address the same resources.

### SUMMARY

The invention is defined by the claims. The remaining embodiments, aspects and examples disclosed below are included for illustrative purposes and for facilitating the understanding of the invention.

Some embodiments advantageously provide methods, systems, and apparatuses for layer grouping for fronthaul control plane (C-plane) messaging. In some embodiments, one or more methods focus on the uplink (UL) direction of the fronthaul interface, e.g., UL direction and the case where each eAxC ID represents a data layer, which is also referred to as layer, user layer, or MIMO layer. In some embodiments, a data layer represents an independent data stream from a WD (e.g., UE) to network node in UL and from network node to a WD (e.g., UE) in DL. One or more embodiments may also be applicable to the downlink direction (or any other direction) and the case where each eAxC ID represents a spatial stream such as beamformed data stream which is dedicated for one layer.

In some embodiments, flexible selection of eAxC IDs (eAxC IDs in an eAxC ID group) is enabled to create subgroups within an eAxC ID group (represented by the group eAxC ID (also referred to as representative eAxC ID). The eAxC ID group is defined in M-plane configuration by O-DU, under the entry of o-ran-uplane-conf.yang, tx/rx-eaxc-id-group in the YANG model used in O-RAN M-plane. YANG may refer to a data modeling language for the definition of data sent over network management protocols such as network configuration protocol (NETCONF) which is used in O-RAN WG4 M-plane. New Section Extensions or a new variant of SE10 can be defined to specify the subgroups. A new variant (or another variant) of SE10 can be seen or referred to as a new section extension, though it may resuse part of the SE10 structure. These section extensions may be used by C-plane messages sent with group eAxC ID, e.g., to specify a subgroup of eAxC IDs associated to C-plane section, where new Section Extension is used. In some other embodiments, subgroup is specified by set of indexes, relative to the positions in a list such as the list under the entry of tx/rx-eaxc-id-group in YANG model configured by O-DU (i.e., the list of the eAxC IDs of the group, including representative-tx/rx-eaxc-id and member-tx/rx-eaxc-id (s)). Two variants of SEs may be used:
- Section Extension with subgroup specified by mask, e.g., it can be used if a condition is met (in a nonlimiting example, if the order of eAxC is not important).
- Section Extension with subgroup specified by a list, e.g., it can be used if another condition is met (in a nonlimiting example, if eAxC order is important to interpret information carried in the section).

In some embodiments, SE with subgroup mask includes a bit-mask, where position of each bit represents an index in a list (e.g., ., the list of the eAxC IDs of a group). In some other embodiments, SE with subgroup list includes a list of indices, each of which represents the eAxC ID index in the list. In some embodiments, layer or WD specific attributes (e.g., Beam ID, beamforming weights, WD/UE ID etc.) can be added to the Section Extension fields.

In some other embodiments, an M-plane configured group eAxC ID which includes multiple eAxC IDs is used in a flexible way, where each C-plane section may specify a sub-set of eAxC IDs from the group where this section is applied. In some embodiments, any subset of layers or spatial streams in the group can be cited by one or more independent sections. In some other embodiments, any subset can be seen as a subgroup of eAxC ID containing one or more layers or spatial streams. The subgroup is then used to convey the common scheduling information (e.g., REs, DMRS configuration, etc.) applied to the eAxC IDs (layers or spatial streams) specified by the subgroup.

One or more embodiments reduces (when compared to conventional methods) a number of C-plane sections/messages required for C-plane messaging for SU-MIMO when one WD is scheduled with multiple layers. If the C-plane section represents a single user, applying the flexible layer grouping allows using a single section, e.g., to schedule all layers.

Further, one or more embodiments provide support for scheduling of MU-MIMO group with WD-specific configuration. Each WD in the MU-MIMO group may be scheduled with own unique configuration, applicable for all layers of the WD. Sections can be applied by the same PRB range within the same slot, resources reference unambiguity is achieved by individual layers specification in the SE.

Some embodiments reduce the number C-plane sections/messages, required to provide measurement data. Grouping measurements, corresponding to multiple layers, may decrease packet rate and packetization overhead for uplink traffic.

Some other embodiments provide support for WD centric scheduling and measurements processing. By using section extensions for layer grouping, it is possible to pack together the data of all layers, required to process a single user in a single section. Therefore, WD specific processing may be started directly as soon as section is received. The embodiments described herein are not limited by WD centric architecture and can be used to support layer grouping for multiple WDs with the same section as well.

In some embodiments, M-plane configuration is simplified. eAxC group may be used in the flexible way by the C-plane, where less M-plane configuration is required. The group eAxC ID can combine layers used by different channels, such as PUSCH, physical uplink control channel (PUCCH), etc.

Some embodiments provide more flexibility and better efficiency with less complexity in comparison with the conventional layer grouping methods (e.g., in the current O-RAN WG4 open fronthaul specification). In some other embodiments, only the information of the used eAxC IDs in the group is provided which improves the efficiency in C-plane messaging (i.e., reduce the waste to provide information of unused eAxC IDs) and reduces the complexity in O-RU.

According to one aspect, a method in a network node is described. The network node includes a distributed unit (DU), where the DU is configured to communicate with a radio unit (RU) via a fronthaul interface (FI). The FI is in a signal path between the DU and the RU. The method includes selecting a plurality of identifiers to create one or more subgroups within an identifier group. The identifier group is represented by a group identifier, and each identifier represents a processing entity in the RU. The method also includes creating the one or more subgroups within the identifier group and determining one or more section extensions usable by one or more control plane (C-plane) messages sent with the group identifier to specify one subgroup of the one or more subgroups. The one subgroup is associated to a C-plane section.

In some embodiments, one or more of: (A) the plurality of identifiers is a plurality of a plurality of extended antenna carrier identifiers (eAxC IDs); (B) the identifier group is an eAxC ID group; and (C) the group identifier is a group eAxC ID.

In some other embodiments, one or more of: (A) the group identifier is an eAxC ID representing a corresponding processing entity in the RU; (B) the RU is an endpoint; (C) the eAxC ID is a representative eAxC ID for the identifier group; and (D) each processing entity in the RU that is the endpoint identified by a corresponding eAxC ID is one processing entity for processing one user data layer.

In some embodiments, the identifier group being represented by the group identifier is defined in a management plane (M-plane) configuration and the M-plane configuration is configured by the DU.

In some other embodiments, the method further includes performing one or more actions based on the one or more section extensions.

The one or more actions include one or more of: (A) transmitting a C-plane message to the RU; (B) performing scheduling for user data layers; and (C) composing control plane messages including section types and section extensions to convey scheduling information.

In some other embodiments, the method further includes one or more of: (A) mapping a wireless device identifier of a plurality of wireless device identifiers to a port list index, where the plurality of wireless device identifiers correspond only to wireless devices that are in use; (B) mapping the port list index to a list entry of a configured post list, the list entry being mapped to a port list identifier; and (C) including mapping information associated with the wireless device identifier, the port list index, the list entry, and the port list identifier in the one or more section extensions.

In some embodiments, the one or more subgroups are specified by a set of indexes relative to positions in a first list of the eAxC IDs.

In some other embodiments, the one or more section extensions includes one or both of a first section extension with a subgroup specified by a mask and a second section extension with the subgroup specified by a second list.

In some embodiments, one or more of: (A) the first section extension includes a bitmask, where a position of each bit of the bitmask represents a list index; (B) the second section extension includes a third list of indices, where each index of the third list of indices represents a port list index; and (C) the one or more section extensions are usable with section types associated with an open radio access network (O-RAN) fronthaul specification.

In some other embodiments, the method further includes one or more of: (A) transferring common DMRS configuration parameters for one or more layers in at least one subgroup of the one or more subgroups from the DU to the RU; (B) reporting measurement data for the one or more layers in the at least one subgroup; and (C) transmitting information of beamforming weights usable by the at least one subgroup of the processing entity to perform beamforming for a user data layer.

According to another aspect, a network node is described. The network node includes a distributed unit (DU) configured to communicate with a radio unit (RU) via a fronthaul interface (FI). The FI is in a signal path between the DU and the RU. The network node being configured to perform the steps of corresponding to the method in the network node that includes a distributed unit (DU).

According to one aspect, a method in a network node is described. The network node includes a radio unit (RU) configured to communicate with a distributed unit (DU) via a fronthaul interface (FI). The FI is in a signal path between the DU and the RU. The method includes receiving one or more control plane (C-plane) messages from the DU. The one or more C-plane messages include one or more section extensions and a group identifier to specify one subgroup of one or more subgroups. The one subgroup is associated to a C-plane section. The one or more subgroups is created within an identifier group. The identifier group is represented by the group identifier, and each identifier of the plurality of identifiers represents a processing entity in the RU. The plurality of identifiers is selected to create the one or more subgroups within an identifier group. The method also includes determining a first configuration for a processing entity associated with the RU based on the one or more C-plane messages.

In some embodiments, one or more of: (A) the plurality of identifiers is a plurality of a plurality of extended antenna carrier identifiers (eAxC IDs); (B) the identifier group is an eAxC ID group; and (C) the group identifier is a group eAxC ID.

In some other embodiments, one or more of: (A) the group identifier is an eAxC ID representing a corresponding processing entity in the RU; (B) the RU is an endpoint; (C) the eAxC ID is a representative eAxC ID for the identifier group; and (D) each processing entity in the RU that is the endpoint identified by a corresponding eAxC ID is one processing entity for processing one user data layer.

In some embodiments, wherein the identifier group is represented by the group identifier is defined in a second configuration, where the second configuration is a management plane (M-plane) configuration, and the second configuration is configured by the DU.

The method further includes performing one or more actions based on the first configuration.

In some embodiments, the one or more subgroups are specified by a set of indexes relative to positions in a first list of the eAxC IDs.

In some other embodiments, the one or more section extensions includes one or both of a first section extension with a subgroup specified by a mask and a second section extension with the subgroup specified by a second list.

In some embodiments, one or more of: (A) the first section extension includes a bitmask, where a position of each bit of the bitmask represents a list index; (B) the second section extension includes a third list of indices, where each index of the third list of indices represents a port list index; and (C) the one or more section extensions are usable with section types associated with an open radio access network (O-RAN) fronthaul specification.

In some other embodiments, the method further includes receiving common DMRS configuration parameters, from the DU, for one or more layers in at least one subgroup of the one or more subgroups.

According to another aspect, a network node including a radio unit (RU) is described. The RU is configured to communicate with a distributed unit (DU) via a fronthaul interface (FI) that is in a signal path between the DU and the RU. The network node is configured to perform the steps of any one of the method in a network node that includes a radio unit (RU).

According to one aspect, a system comprising a first network node and a second network node is described. The first network node includes a distributed unit (DU), and the second network node includes a radio unit (RU). The DU is configured to communicate with the RU via a fronthaul interface (FI). The FI being in a signal path between the DU and the RU. The first network node is configured to select a plurality of identifiers to create one or more subgroups within an identifier group, where the identifier group is represented by a group identifier, and each identifier represents a processing entity in the RU. The first network node is further configured to create the one or more subgroups within the identifier group, determine one or more section extensions usable by one or more control plane (C-plane) messages sent with a group identifier to specify one subgroup of the one or more subgroups, where the one subgroup being associated to a C-plane section, and transmit the one or more C-plane messages to the RU. The second network node is configured to receive the one or more control plane (C-plane) messages from the DU, determine a first configuration for a processing entity associated with the RU based on the one or more C-plane messages, and perform one or more actions based on the first configuration.

In some embodiments, the first network node is further configured to perform scheduling for user data layers and compose control plane messages including section types and section extensions to convey scheduling information.

In some other embodiments, the first network node and the second network node are different, or the first network node and the second network node are the same.

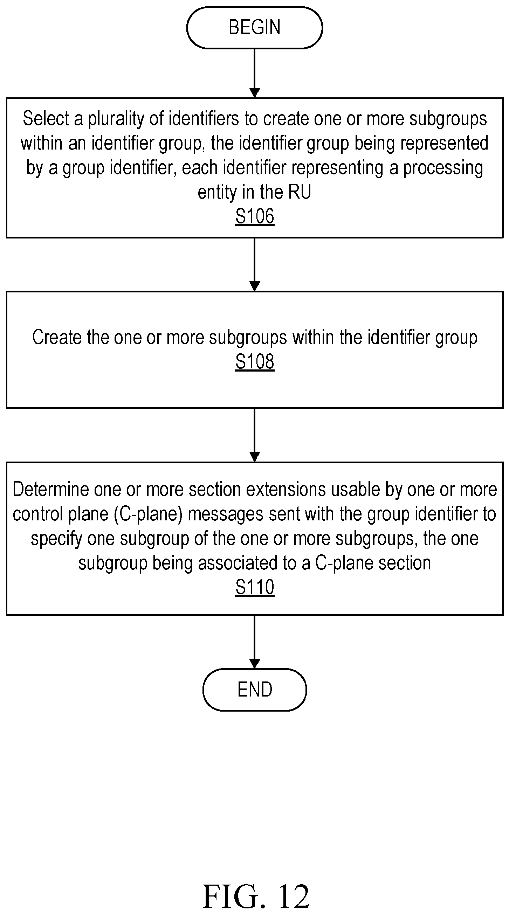

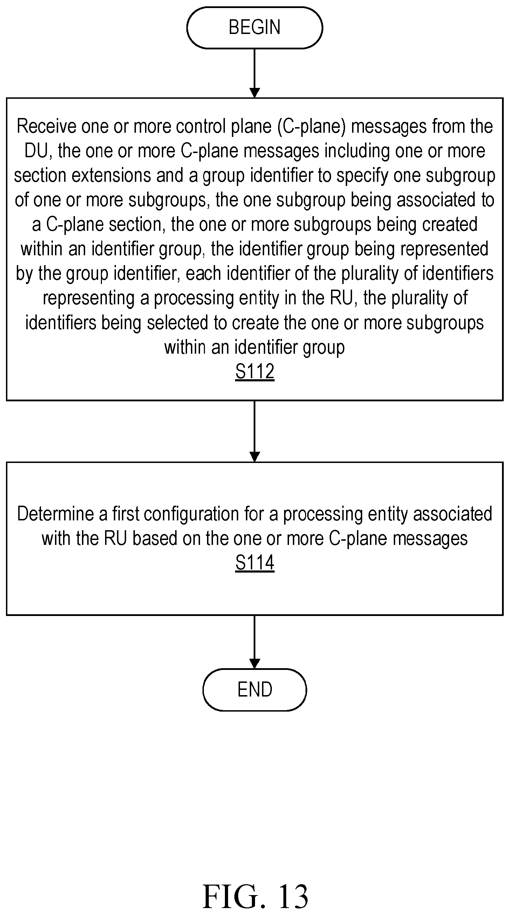

In the following, the invention is best understood in view of figures 12 and 13. The remaining embodiments, aspects and examples disclosed below are included for illustrative purposes and for facilitating the understanding of the invention.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 shows an example fronthaul interface between RU and DU;
FIG. 2 shows a WDBF implementation supported by a UL specification of O-RAN WG4;
FIG. 3 shows UL C-plane and U-plane data flows associated with an O-RAN WG4 specification;
FIG. 4 shows a first sub-variant of a DMRS-BF-EQ implementation;
FIG. 5 shows a second sub-variant of a DMRS-BF-EQ implementation;
FIG. 6 shows a DMRS-BF-NEQ implementation;
FIG. 7 shows UL C-plane and U-plane data flows for DMRS-BF;
FIG. 8 is a schematic diagram of an exemplary network architecture illustrating a communication system connected via an intermediate network to a host computer according to the principles in the present disclosure;
FIG. 9 is a block diagram of a host computer communicating via a network node with a wireless device over an at least partially wireless connection according to some embodiments of the present disclosure;
FIG. 10 shows a block diagram illustrating a virtualization environment 110in which functions implemented by some embodiments may be virtualized;
FIG. 11 is a flowchart of an exemplary process in a network node according to some embodiments of the present disclosure;
FIG. 12 is a flowchart of another process in a network node according to an embodiment of the invention;
FIG. 13 is a flowchart of another process in another network node according to an embodiment of the invention; and
FIG. 14 shows an example eAxC subgroup specification according to some embodiments of the present disclosure.

### DETAILED DESCRIPTION

Before describing in detail exemplary embodiments, it is noted that the embodiments reside primarily in combinations of apparatus components and processing steps related to layer grouping (also including grouping of spatial streams) for fronthaul control plane (C-plane) messaging. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multistandard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), a DU (e.g., O-DU), an RU (e.g., O-RU), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH), a DU (e.g., O-DU), an RU (e.g., O-RU), etc.

Note that although terminology from one particular wireless system, such as, for example, 3GPP or O-RAN LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to be performed by a single physical device and, in fact, can be distributed among several physical devices.

In some embodiments, the term "eAxC ID" is used and may refer to an identifier that indicates or represents a processing entity in a system or component of a system such as in the RU (e.g., O-RU). Processing entity may include any components of the RU configured to perform functions (e.g. processing DMRS, channel estimation, calculating beamforming weights, performing beamforming, etc.) associated with the RU, e.g., any of the components associated with the RU as shown on FIGS. 1-7, any functions of the RU described herein, etc. In some other embodiments, the term "port list" is used and may refer to M-Plane configured unique list (e.g., eAxC_ID list) which may be a union of two or more identifiers, e.g., {representative-tx-eaxc-id, member-tx-eaxc-id} or a union of {representative-rx-eaxc-id, member-rx-eaxc-id}. A port list index may refer to an index corresponding to a port list. In some embodiments, the term "control plane" is used and may refer specifically to real-time control between DU (e.g., O-DU) and RU (e.g., O-RU). The control plane may be different from a WD control plane, which is between WD and base station. In some other embodiments, the term "management plane" is used and may refer to non-real-time management operations between the DU (e.g., O-DU) and RU (e.g., O-RU). In some embodiments, the term "user plane" is used and may refer to the operations to transfer the fronthaul sample data (e.g., IQ sample data, or called IQ data) between (e.g., O-DU) and RU (e.g., O-RU).

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

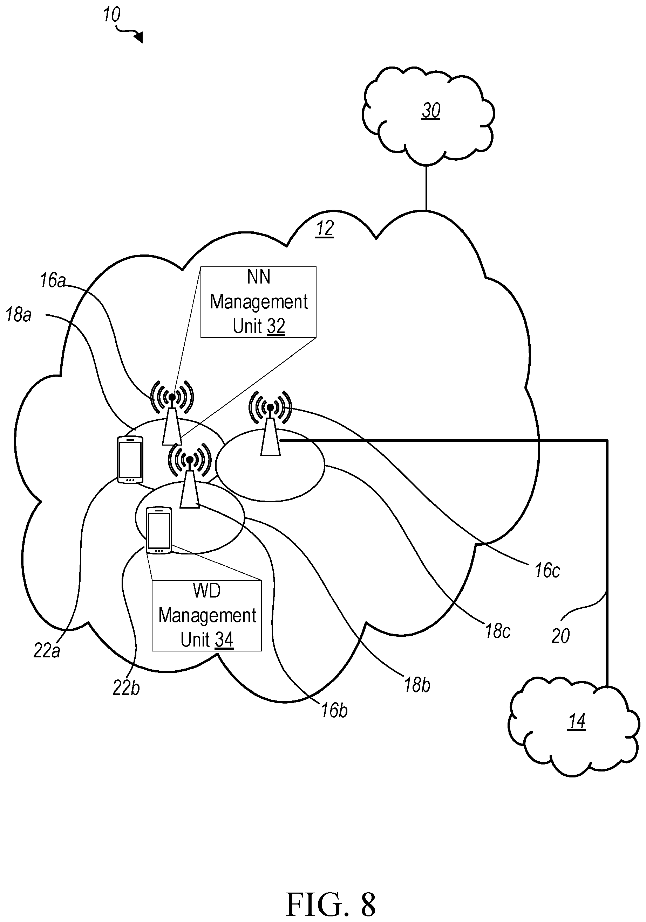

Referring now to the drawing figures, in which like elements are referred to by like reference numerals, there is shown in FIG. 8 a schematic diagram of a communication system 10, according to an embodiment. Communication system 10 may include a network such as a 3GPP-type or O-RAN based cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to another device/component, which may be embodied in the hardware and/or software of a standalone server, a cloud-implemented server, a distributed server or as processing resources in a server farm. The intermediate network 30 may be one of, or a combination of more than one of, a public, private or hosted network. The intermediate network 30, if any, may be a backbone network or the Internet. In some embodiments, the intermediate network 30 may comprise two or more sub-networks (e.g., core network 14) or other networks (not shown).

A network node 16 is configured to include a NN management unit 32 which is configured to perform any step and/or task and/or process and/or method and/or feature described in the present disclosure, e.g., NN functions. For example, network node 16 (and/or NN management unit 32) may comprise a DU (e.g., an O-DU) and/or RU (e.g., an O-RU) and/or CU (e.g., an O-CU and perform DU and/or RU and/or CU functions. A wireless device 22 is configured to include a WD management unit 34 which is configured to perform any step and/or task and/or process and/or method and/or feature described in the present disclosure, e.g., WD functions. In some embodiments, WD may be configured to perform any of the network node functions.

In some embodiments, the communication system 10 includes one or more Open-RAN (O-RAN) network nodes (e.g., network nodes 16). An O-RAN network node 16 is a node in the communication system 10 that supports an O-RAN specification (e.g., a specification published by the O-RAN Alliance, or any similar organization) and may operate alone or together with other nodes to implement one or more functionalities of any node in the communication system 10, including one or more network nodes 16 and/or core network nodes (such as nodes 16 in core network 14).

Examples of an O-RAN network node include an open or O-RAN radio unit (O-RU), an open or O-RAN distributed unit (O-DU), an open or O-RAN central unit (O-CU), including an O-CU control plane (O-CU-CP) or an O-CU user plane (O-CU-UP), a RAN intelligent controller (near-real time or non-real time) hosting software or software plug-ins, such as a near-real time control application (e.g., xApp) or a non-real time control application (e.g., rApp), or any combination thereof (the adjective "open" designating support of an O-RAN specification). The network node 16 may support a specification by, for example, supporting an interface defined by the O-RAN specification, such as an A1, F1, W1, E1, E2, X2, Xn interface, an open fronthaul user plane interface, or an open fronthaul management plane interface, any other fronthaul interface which may be configured to perform communication actions such as receiving and transmitting messages, relaying messages, converting messages, etc. Moreover, an O-RAN access node may be a logical node in a physical node. Furthermore, an O-RAN network node 16 may be implemented in a virtualization environment (described further below) in which one or more network functions are virtualized. For example, the virtualization environment may include an O-Cloud computing platform orchestrated by a Service Management and Orchestration Framework via an O-2 interface defined by the O-RAN Alliance or comparable technologies. The network nodes 16 facilitate direct or indirect connection of user equipment (UE), such as by connecting WDs 22a, 22b, and 22c (one or more of which may be generally referred to as UEs to the core network 14 over one or more wireless connections.

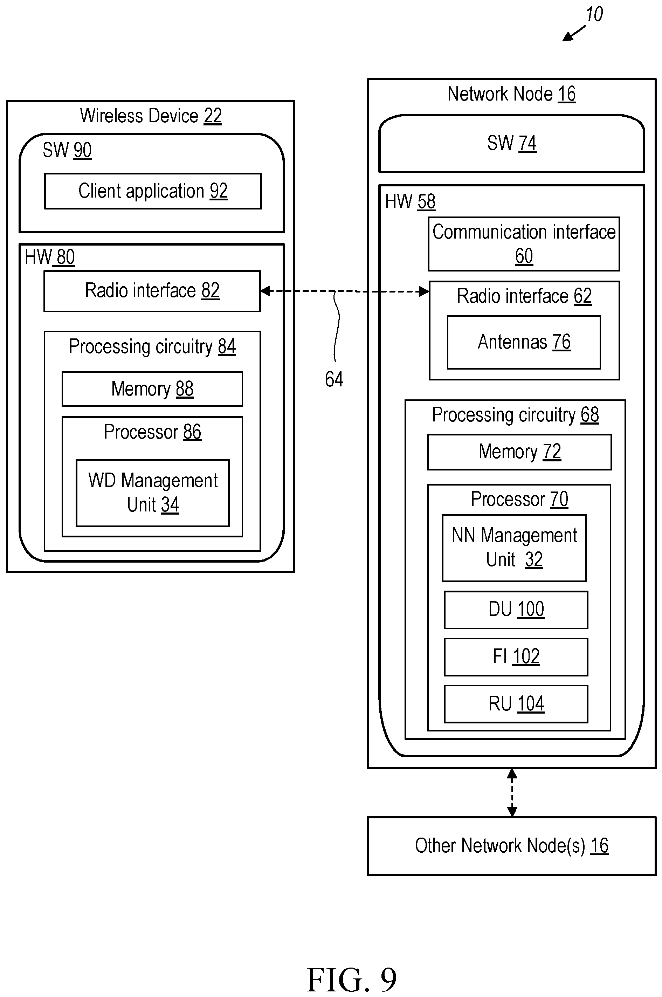

Example implementations, in accordance with an embodiment, of the WD 22 and network node 16 discussed in the preceding paragraphs will now be described with reference to FIG. 9. In a communication system 10, a network node 16 is provided and includes hardware 58 enabling it to communicate with the WD 22 and/or any other network nodes 16. The hardware 58 may include a communication interface 60 for setting up and maintaining a wired or wireless connection with an interface of a different communication device of the communication system 10. Communication interface 60 may include a fronthaul interface and/or refer to a fronthaul interface and/or be configured to perform fronthaul interface functions. The hardware 58 may also include a radio interface 62 (which may include an array of antennas 76) for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include a NN management unit 32 which is configured to perform any step and/or task and/or process and/or method and/or feature described in the present disclosure, e.g., NN functions. Further, processing circuitry 68 of the network node 16 may include a DU 100 and/or fronthaul interface (FI) 102 and/or RU 104. DU 100 may be configured to perform any step and/or task and/or process and/or method and/or feature described in the present disclosure, e.g., DU functions. FI 102 may be configured to perform any step and/or task and/or process and/or method and/or feature described in the present disclosure, e.g., FI functions. RU 104 may be configured to perform any step and/or task and/or process and/or method and/or feature described in the present disclosure, e.g., RU functions.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include a WD management unit 34 which is configured to perform any step and/or task and/or process and/or method and/or feature described in the present disclosure, e.g., WD functions.

In some embodiments, the inner workings of the network node 16 and WD 22 may be as shown in FIG. 9 and independently, the surrounding network topology may be that of FIG. 8.

Although FIGS. 8 and 9 show various "units" such as NN management unit 32, and WD management unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

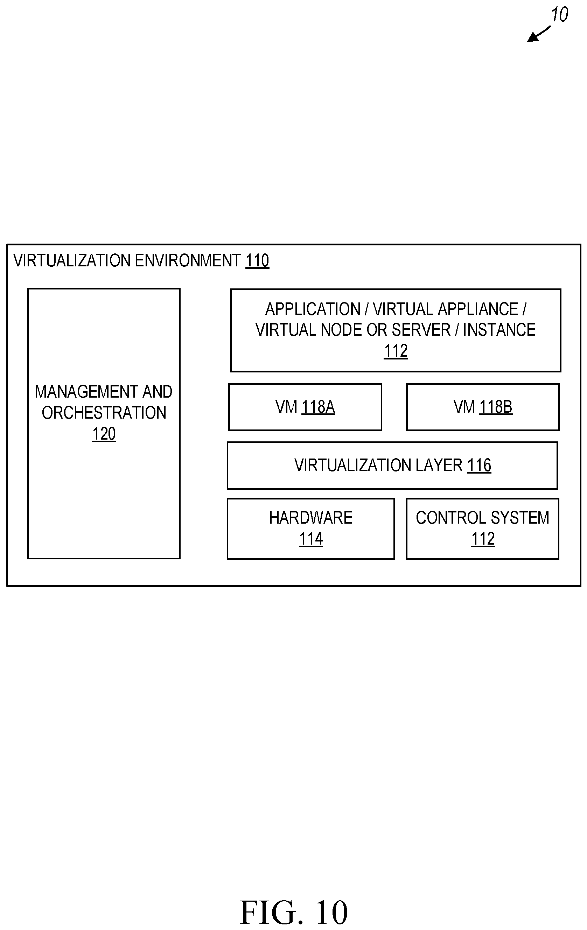

FIG. 10 is a block diagram illustrating a virtualization environment 110 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 110 hosted by one or more of hardware nodes, such as a hardware computing device that operates as a network node (e.g., network node 16), UE (e.g., WD 22), core network node 16, or host. Further, in embodiments in which the virtual node does not require radio connectivity (e.g., a core network node or host), then the node may be entirely virtualized. In some embodiments, the virtualization environment 110 includes components defined by the O-RAN Alliance, such as an O-Cloud environment orchestrated by a Service Management and Orchestration Framework via an O-2 interface.

Applications 112 (which may alternatively be called software instances, virtual appliances, network functions, virtual nodes, virtual network functions, etc.) are run in the virtualization environment 110 to implement some of the features, functions, and/or benefits of some of the embodiments disclosed herein.

Hardware 114 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 116 (also referred to as hypervisors or virtual machine monitors (VMMs)), provide VMs 118a and 118b (one or more of which may be generally referred to as VMs 118), and/or perform any of the functions, features and/or benefits described in relation with some embodiments described herein. The virtualization layer 116 may present a virtual operating platform that appears like networking hardware to the VMs 118.

The VMs 118 comprise virtual processing, virtual memory, virtual networking or interface and virtual storage, and may be run by a corresponding virtualization layer 116. Different embodiments of the instance of a virtual appliance 112 may be implemented on one or more of VMs 118, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 118 may be a software implementation of a physical machine that runs programs as if they were executing on a physical, non-virtualized machine. Each of the VMs 118, and that part of hardware 114 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 118 on top of the hardware 114 and corresponds to the application 112.

Hardware 114 may be implemented in a standalone network node with generic or specific components. Hardware 114 may implement some functions via virtualization. Alternatively, hardware 114 may be part of a larger cluster of hardware (e.g. such as in a data center or CPE) where many hardware nodes work together and are managed via management and orchestration 120, which, among others, oversees lifecycle management of applications 112. In some embodiments, hardware 114 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system QQ512 which may alternatively be used for communication between hardware nodes and radio units.

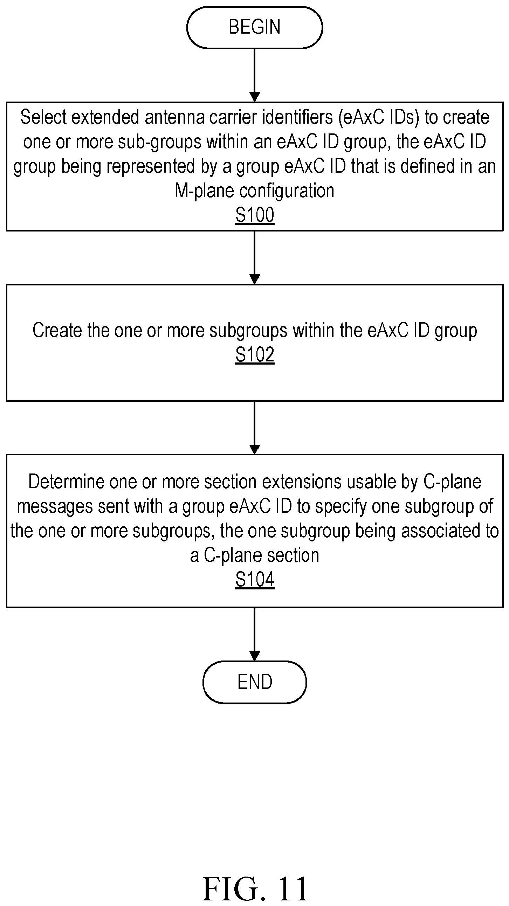

FIG. 11 is a flowchart of an exemplary process in a network node 16. One or more blocks described herein may be performed by one or more elements of network node 16 such as by one or more of processing circuitry 68 (including the NN management unit 32), processor 70, radio interface 62 and/or communication interface 60. Communication interface 60 may refer to or include a fronthaul interface between a distributed unit (DU) and a radio unit (RU) (e.g., where the DU and/or RU are comprised in the network node 16). Network node 16 such as via processing circuitry 68 and/or processor 70 and/or radio interface 62 and/or communication interface 60 (e.g., fronthaul interface) is configured to select (Block S100) extended antenna carrier identifiers (eAxC IDs) to create one or more subgroups within an eAxC ID group, where the eAxC ID group is represented by a group eAxC ID (also referred to as representative eAxC ID) that is defined in an M-plane configuration, create (Block S102) the one or more subgroups within the eAxC ID group, and determine (Block S104) one or more section extensions usable by C-plane messages sent with a group eAxC ID to specify one subgroup of the one or more subgroups. The one subgroup is associated to a C-plane section.

In some embodiments, the one or more subgroups are specified by a set of indexes relative to positions in a first list of the eAxC IDs.

In some other embodiments, the one or more section extensions includes one or both of a first section extension with a subgroup specified by a mask and a second section extension with the subgroup specified by a second list.

In some embodiments, one or more of the first section extension includes a bit-mask, where a position of each bit represents a list index; the second section extension includes a third list of indices, where each index of the third list of indices represents an eAxC ID index in a list of eAxC IDs for a eAxC group configured by O-DU via M-plane; and the one or more section extensions are usable with section types associated with an open radio access network (O-RAN) open-fronthaul specification.

In some other embodiments, the method further includes one or both of transferring common DMRS configuration parameters for one or more layers in at least one subgroup of the one or more subgroups from the DU to the RU and reporting measurement data for the one or more layers in the at least one subgroup.

FIG. 12 is a flowchart of process in a network node 16 (e.g., including a DU 100) according to an embodiment of the invention. One or more blocks described herein may be performed by one or more elements of network node 16 such as by one or more of processing circuitry 68 (including the NN management unit 32 and/or DU 100), processor 70, radio interface 62 and/or communication interface 60. Network node 16 such as via processing circuitry 68 and/or processor 70 and/or radio interface 62 and/or communication interface 60 is configured to select (Block S106) a plurality of identifiers to create one or more subgroups within an identifier group. The identifier group is represented by a group identifier, and each identifier represents a processing entity in the RU. The network node 16 is also configured to create (Block S108) the one or more subgroups within the identifier group and determining (Block S110) one or more section extensions usable by one or more control plane (C-plane) messages sent with the group identifier to specify one subgroup of the one or more subgroups. The one subgroup is associated to a C-plane section.

In some embodiments, one or more of: (A) the plurality of identifiers is a plurality of a plurality of extended antenna carrier identifiers (eAxC IDs); (B) the identifier group is an eAxC ID group; and (C) the group identifier is a group eAxC ID.

In some other embodiments, one or more of: (A) the group identifier is an eAxC ID representing a corresponding processing entity in the RU; (B) the RU 104 is an endpoint; (C) the eAxC ID is a representative eAxC ID for the identifier group; and (D) each processing entity in the RU 104 that is the endpoint identified by a corresponding eAxC ID is one processing entity for processing one user data layer.

In some embodiments, the identifier group being represented by the group identifier is defined in a management plane (M-plane) configuration and the M-plane configuration is configured by the DU 100.

In some other embodiments, the method further includes performing one or more actions based on the one or more section extensions.

In some embodiments, the one or more actions include one or more of: (A) transmitting a C-plane message to the RU; (B) performing scheduling for user data layers; and (C) composing control plane messages including section types and section extensions to convey scheduling information.

In some other embodiments, the method further includes one or more of: (A) mapping a wireless device identifier of a plurality of wireless device identifiers to a port list index, where the plurality of wireless device identifiers correspond only to wireless devices that are in use; (B) mapping the port list index to a list entry of a configured post list, the list entry being mapped to a port list identifier; and (C) including mapping information associated with the wireless device identifier, the port list index, the list entry, and the port list identifier in the one or more section extensions.

In some embodiments, the one or more subgroups are specified by a set of indexes relative to positions in a first list of the eAxC IDs.

In some other embodiments, the one or more section extensions includes one or both of a first section extension with a subgroup specified by a mask and a second section extension with the subgroup specified by a second list.

In some embodiments, one or more of: (A) the first section extension includes a bitmask, where a position of each bit of the bitmask represents a list index; (B) the second section extension includes a third list of indices, where each index of the third list of indices represents a port list index; and (C) the one or more section extensions are usable with section types associated with an open radio access network (O-RAN) fronthaul specification.

In some other embodiments, the method further includes one or more of: (A) transferring common DMRS configuration parameters for one or more layers in at least one subgroup of the one or more subgroups from the DU 100 to the RU 104; (B) reporting measurement data for the one or more layers in the at least one subgroup; and (C) transmitting information of beamforming weights usable by the at least one subgroup of the processing entity to perform beamforming for a user data layer.

FIG. 13 is a flowchart of a process in a network node 16 (e.g., including a RU 104) according to an embodiment of the invention. One or more blocks described herein may be performed by one or more elements of network node 16 such as by one or more of processing circuitry 68 (including the NN management unit 32 and/or RU 104), processor 70, radio interface 62 and/or communication interface 60. Network node 16 such as via processing circuitry 68 and/or processor 70 and/or radio interface 62 and/or communication interface 60 is configured to receive (S112) one or more control plane (C-plane) messages from the DU 100. The one or more C-plane messages include one or more section extensions and a group identifier to specify one subgroup of one or more subgroups. The one subgroup is associated to a C-plane section. The one or more subgroups is created within an identifier group. The identifier group is represented by the group identifier, and each identifier of the plurality of identifiers represents a processing entity in the RU 104. The plurality of identifiers is selected to create the one or more subgroups within an identifier group. The network node is also configured to determine (Block S114) a first configuration for a processing entity associated with the RU 104 based on the one or more C-plane messages.

In some embodiments, one or more of: (A) the plurality of identifiers is a plurality of a plurality of extended antenna carrier identifiers (eAxC IDs); (B) the identifier group is an eAxC ID group; and (C) the group identifier is a group eAxC ID.

In some other embodiments, one or more of: (A) the group identifier is an eAxC ID representing a corresponding processing entity in the RU 104; (B) the RU 104 is an endpoint; (C) the eAxC ID is a representative eAxC ID for the identifier group; and (D) each processing entity in the RU 104 that is the endpoint identified by a corresponding eAxC ID is one processing entity for processing one user data layer.

In some embodiments, wherein the identifier group is represented by the group identifier is defined in a second configuration, where the second configuration is a management plane (M-plane) configuration, and the second configuration is configured by the DU.

The method further includes performing one or more actions based on the first configuration.

In some embodiments, the one or more subgroups are specified by a set of indexes relative to positions in a first list of the eAxC IDs.

In some other embodiments, the one or more section extensions includes one or both of a first section extension with a subgroup specified by a mask and a second section extension with the subgroup specified by a second list.

In some embodiments, one or more of: (A) the first section extension includes a bitmask, where a position of each bit of the bitmask represents a list index; (B) the second section extension includes a third list of indices, where each index of the third list of indices represents a port list index; and (C) the one or more section extensions are usable with section types associated with an open radio access network (O-RAN) fronthaul specification.

In some other embodiments, the method further includes receiving common DMRS configuration parameters, from the DU 100, for one or more layers in at least one subgroup of the one or more subgroups.

Having described the general process flow of arrangements of the disclosure and having provided examples of hardware and software arrangements for implementing the processes and functions of the disclosure, the sections below provide details and examples of arrangements for layer grouping (also including grouping of spatial streams) for fronthaul control plane (C-plane) messaging. Any of the functions described may be performed by network node 16 (and/or its components) and/or WD 22 (and/or its components).

Some embodiments improve O-RAN C/U-plane operations on resources scheduling (including DMRS configuration) and measurement reporting. For example, the number of C-plane requests may be reduced. Multiple layers may be allocated for a single user, while scheduling of multiple WDs 22 is supported, and/or the same resources may be utilized but having individual WD-specific configuration(s). Some embodiments provide improvement of traffic characteristics for measurement reporting and facilitate WD centric scheduling and data processing on the O-DU data processing stages, e.g., the PHY (physical layer) processing in O-DU (also referred to as PHY-Upper). In some embodiments, the term "wireless device identifier" or "WD identifier" may be used and may refer to user equipment identifier or "UE ID" (e.g., as describe in O-RAN specifications).

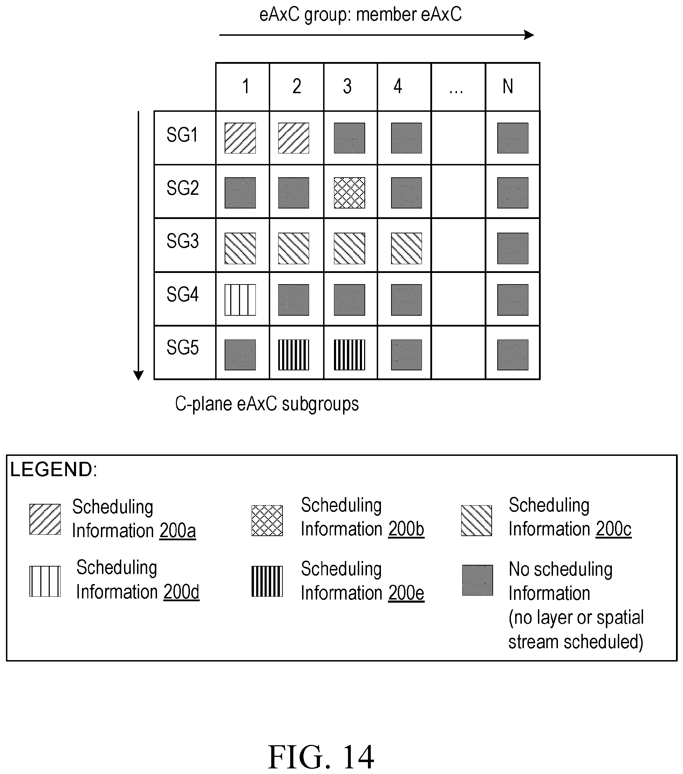

In some embodiments, C-plane section extensions are introduced, e.g., operating together with M-plane configuration, configuring the eAxC ID group under the entry of o-ran-uplane-conf.yang, tx/rx- eaxc-id-group, in the YANG model used in O-RAN open fronthaul specification.. Sections, utilizing new section extensions, may be transported using a value such as ecpriRtcid / ecpriPcid value, corresponding to an identifier (e.g., representative-tx/rx-eaxc-id, which is also referred as group eAxC ID). Relation of individual sections to identifiers such as member-tx/rx-eaxc-id may be established by reading information from the new C-plane section extensions, including the indexes, relative to a list such as the list of the eAxC ID(s) of an eAxC group, e.g., including representative-tx/rx-eaxc-id and member-tx/rx-eaxc-id(s). FIG. 14 shows the concept of C-plane eAxC ID subgroups as a subset of eAxC IDs, grouped with M-plane configuration. In FIG. 14, eAxC groups associated with eAxC IDs and subgroups (SG) are shown. For example, SG1-5 represent 5 subgroups (e.g., C-plane eAxC ID subgroups). In FIG. 14, there is one common eAxC ID group with N eAxC IDs indexed from 1 to N. In this example, eAxC ID #1 - #N may refer to member eAxCs of the eAxC group. Different SGs may include or correspond to different sets of eAxC IDs. In this example, SG1 may include eAxC ID #1 and #2, which may have the same scheduling information 200a (REs scheduled, DMRS configuration, etc.). SG2 may include only eAxC ID #3, which may have scheduling information 200b which may be different from scheduling information 200a of SG1. SG3 may include eAxC ID #1, #2, #3, and #4, which may have the same scheduling information 200c. SG4 may include only eAxC ID #1, which may have scheduling information 200d. And SG5 may include eAxC ID #2 and #3, which may have scheduling information 200e. In this nonlimiting example, the processing entity or entities referred to by the eAxC IDs in different SGs process different user layers or different spatial streams, e.g., the user layers or spatial streams scheduled for different PRBs (or REs). In FIG. 14, a solid grey box represents no layer or spatial stream scheduled for the corresponding eAxC ID in each SG, while any other box with any other color pattern represents a layer or spatial stream scheduled for the corresponding eAxC ID in each SG. The boxes with the same color pattern represent different layers or spatial streams that are assigned to the processing entities identified by the eAxC IDs in the same SG.

Table 2 and Table 3 show two design examples of the new Section Extensions for flexible layer grouping, showing the Section Extension fields. Other designs of Section Extensions specifying eAxC subgroup can be provided in different forms than the two examples. Table 2 shows the first example of Section Extension for the invention. In this example, no layer or UE specific attributes are included in the Section Extension. But such attributes (e.g., antenna port per layer for DMRS configuration, beam ID, WD/ UE ID, etc.) can be added to the Section Extension fields for eAxC IDs indicated by the mask as an extension. In this example, the position of each bit in the eaxcMask corresponds to an index in the member-tx/rx-eaxc-id list. Set bits (e.g., set bit = 1 for the correspond bits) indicate indexes of the member-tx/rx-eaxc-id list elements to be used. Section Extension does not provide any information in which order eAxC IDs are used. The relation of information carried in the section to layers in the group (if required) may be done by using other information, carried in the section. Field extLen may specify maximal number of eAxCs grouped in the M-plane. For example. if 16 eAxC IDs are grouped together, extLen is 1. In case extLen is 3, mask allows to address up to 80 eAxC IDs. However, the maximum size of an eAxC group in current M-plane is 64. So, bits above index 64 may not be used.

**Table 2 - SE with eAxC subgroup mask**

| **0(msb)** | **1** | **2** | **3** | **4** | **5** | **6** | **7(lsb)** | **# of bytes** | |
|---|---|---|---|---|---|---|---|---|---|
| ef | ExtType | | | | | | | 1 | Octet N |
| extLen=1/2/3 (in 4 byte words) | | | | | | | | 1 | Octet N+1 |
| eaxcMask[15/47/79:0] | | | | | | | | 2/6/10 | |

Table 3 shows the first example of Section Extension for the invention, which provides eAxC subgroup as ordered list of indexes together with associated attributes. Table The index of each eAxC ID is provided implicitly, size of associated data is determined from extLen and numPortc. This example provides specific associated attributes to individual layers (e.g., antenna port per layer for DMRS configuration, beam ID, WD/ UE ID, etc.) and to set different order of individual layers, referred by the C-plane section.

**Table 3 - SE with eAxC subgroup list**

| **0(msb)** | **1** | **2** | **3** | **4** | **5** | **6** | **7(lsb)** | **# of bytes** | |
|---|---|---|---|---|---|---|---|---|---|
| ef | ExtType | | | | | | | 1 | Octet N |
| ExtLen | | | | | | | | 1 | Octet N+1 |
| NumPortc | | | | | | | | 1 | Octet N+2 |
| Reserved | | | | | | | | 1 | Octet N+3 |
| First layer configuration | | | | | | | | | |
| reserved | First layer eaxcInd | | | | | | | 1 | Octet N+4 |
| First layer associated attributes | | | | | | | | var | |
| ... | | | | | | | | | |
| Last layer configuration | | | | | | | | | |
| reserved | Last layer eaxcInd | | | | | | | 1 | |
| Last layer associated attributes | | | | | | | | var | |

Using layers grouping with new section extension, all (or in some cases, some of the) eAxC IDs available for grouping together can be configured via M-plane under the entry of o-ran-uplane-conf.yang, tx/rx- eaxc-id-group in YANG model used in O-RAN open fronthaul specification. It is of a great advantage that the O-DU only needs to configure one eAxC ID group (per carrier or per multiple carriers) and flexibly assign layers to different subgroups using the method in this document, without the need to manage many subgroups which increases the system complexity. For example, if there are 128 eAxC IDs available one eAxC group containing all 128 eAxC IDs may be created. Further, Any combination of the eAxC IDs may be created as a subgroup by using the section extension (e.g., new section extension associated with one more methods of the present disclosure). As described above, the method is very efficient by only presenting only the used eAxC IDs (referred to by bit-mask or eAxC indices) in the new section extension, not including any information about unused eAxC IDs.

One WD 22 with multiple layers (SU-MIMO) can be scheduled with a single section extended with a SE, by specifying a subset of layers (also referred to as a subgroup). For the above two specific examples, if layer-specific configuration or attribute is required for scheduling, SE with eAxC subgroup represented as a list (the second example shown by Table 3) can be used. If layer specific configuration or attribute is not required, SE with eAxC subgroup mask (the first example shown by Table 2) can be used. Sections, extended with eAxC subgroup information may be transferred with C-plane message, using representative-tx/rx-eaxc-id as an identifier associated with eCPRI such as ecpriRtcid / ecpriPcid value in the transport header. This solution avoids sending identical configuration information for multiple layers.

Multiple WDs 22 can be scheduled on the same frequency-time resources (MU-MIMO) requiring WD-specific configuration or attributes which can be conveyed using individual WD-specific sections, transferring scheduling configuration or attributes for a specific WD 22. Layers of each WD 22, can be defined by the eAxC subgroup section extensions. For example, as shown in Figure 8, the section corresponding to the first WD 22 may be specified with the layers (eAxC IDs within the group) with index 1 and 2; the section corresponding to the second WD 22 may be specified with the layers (eAxC IDs within the group)with index 3; the section corresponding to the third WD 22 may be specified with the layers (eAxC IDs within the group) with index 1, 2, 3 and 4. This solution allows scheduling MU-MIMO groups with WD specific configuration without the need to define multiple eAxC groups.

In another use case where Multiple WDs 22 are scheduled on the same frequency-time resources (MU-MIMO), the scheduling configuration or attributes for each WD 22 are transferred in one section with the section extension specifying all layers of multiple WDs 22 in a subgroup and also providing one or more WD-specific configurations or attributes (e.g. Beam ID, WD/UE ID, DMRS configuration parameter(s)) for each layer in the subgroup.

When RU 104 (e.g., O-RU) performs SINR and/or RRM measurements, these measurements may be sent to the DU 100 using C-plane messages, transferring measurement data report in a similar way, similar to the Section Extension described above for transferring scheduling information. Depending on the type, measurements may be provided per data layer, or some measurements can be provided by a WD 22 with multiple layers. WD centric processing architecture of the DU 100 (e.g., O-DU) may require receiving all measurement data to start processing for a WD 22. In such a case, layer grouping may be applied as follows.

In some embodiments, the RU 104 (e.g., O-RU) may send C-plane sections containing measurement data applicable for layers, associated to a section, or combining layer-specific data in a single section. Each section may be extended with a section extension, specifying eAxC subgroup associated to layers, where measurements are applicable. These sections may be transferred with representative-tx/rx-eaxc-id (group eAxC ID) as ecpriRtcid / ecpriPcid field in the transport header as well. In case the section is defined as a description of resources, e.g., scheduled for a single WD 22, such section may include all measurement data (for one or more layers) for this WD 22. This may simplify processing of the measurement data for WD centric data processing architecture. With this approach, a number of packets involved in measurement reporting may be reduced, also, more data may be packaged into individual packets. That is, packetization overhead may be reduced.

In some embodiments, introduction of eAxC subgroups allow utilizing M-plane configured eAxC group in more flexible way. The M-plane configured group can be seen as a pool of eAxC IDs, which can be selected by a scheduler in any order with any quantity. In some cases, this flexibility allows reducing a number of group configurations created within the M-plane. Also, it improves the C-plane messaging efficiency (reducing the message overhead) by containing only the information regarding the used eAxC IDs in the eAxC group in the section extension.

One or more embodiments and examples describe using Section Extensions. It should be noted that the embodiments and examples for subgroup layer grouping can be used with new Section Types to be defined in O-RAN open-fronthaul specification.

In some embodiments, the section extension may be created as a variant of an existing section extension, e.g., Section Extension 10. For example, the formatting of the actual "Section Extension" may be determined by the value of a parameter such as beamGroupType parameter in Section Extension 10. For example, if beamGroupType parameter=11b, the parameter portListIndex (each portListIndex represent the list index of an eAxC ID in the list of the eAxC ID group) may be associated with each scheduled ueId or beamId in the section description in a section type and the section extension, e.g., Section Extension 10.

In some other embodiments, an identifier associated with a WD (e.g., ueId) may be mapped to a port list index (e.g., portListIndex). The port list index may point or map to an entry number/index (e.g., List-entry) of an M-plane configured port list, where each list entry is mapped to a port list (e.g., eAxC ID port list) or port list identifier, which may include identifiers such as representative-tx-eaxc-id, a list of member-tx-eaxc-id. Note that the eAxC ID port list refers to the eAxC ID group. The eAxC ID port list contains the list of the eAxC IDs in the eAxC ID group. These embodiments may be beneficial at least because avoids unnecessary pointers or mappings between unscheduled identifiers (e.g., scheduled UE-IDs) and list entries, thereby reducing mappings and list entries. In other words, these embodiments provided a configuration that incudes mappings and/or pointers only to identifiers (e.g., UE-IDs) that are used. In some embodiments, a network node 16 (and/or DU 100) performs one or more actions based on the section extensions. For example, network node 16 (and/or DU 100) may transmit C-plane messages with a group eAxC ID to specify one subgroup of one or more subgroups, where the one subgroup may be associated to a C-plane section, and the section extensions may be associated with eAxC IDs, eAxC ID groups, port list indexes, etc. The messages may be transmitted to a RU 104 (e.g., comprised in a network node 16) which may cause the RU 104 to use the message to get a configuration for a processing entity (based on the eAxC IDs, etc.).

In some embodiments, in O-RAN, a group identifier may be referred to as an eAxC ID representing a processing entity in O-RU which may be referred to as an endpoint. This special eAxC ID may be referred to as representative eAxC ID for the group. That is, the first eAxC ID in the port list may be the representative eAxC ID. Each processing entity in the RU (i.e., endpoint) identified by an eAxC ID (e.g., assigned by the O-DU) is an entity for processing one user data layer.

In some other embodiments, the section extension does not only provide the subgroup information but also other information, e.g., UE ID or Beam ID, etc. One or more section extensions may be sent from the O-DU to the O-RU. And O-RU may perform one or more communication actions or operations according to the information carried in the received one or more section extensions. For example, O-RU may perform beamforming operations for the user data layers identified by the subgroup of the eAxC IDs, using the information carried by the C-plane messages. The beamforming operation may include performing channel estimation, calculating beamforming weights and performing beamforming on the received signal of the user layers.

In some embodiments, network node 16 (comprising a DU 100) may perform one or more actions based on one or more section extensions. For example, network node 16 (comprising a DU 100) may perform scheduling for the user data layers and compose the C-plane messages including section types and section extensions to convey the scheduling information (e.g., including the scheduled PRBs, symbols, Beam ID, WD ID (UE ID), DMRS configuration, eAxC ID assignment for a set of user data layers, etc.).

In some other embodiments, the information of beamforming weights (i.e., beam ID) may be conveyed (to one or more entities, devices, or components of system 10). The information may be used by a subgroup of the processing entity (identified by the eAxC ID) to perform beamforming for a user data layer. In some embodiments, one port list index corresponds or maps to an eAxC ID. A port list may be a list of eAxC IDs. The section extension provides the mapping information between wireless device identifiers and eAxC IDs.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method in a network node (16), the network node (16) comprising a distributed unit, DU (100), the DU (100) being configured to communicate with a radio unit, RU (104), via a fronthaul interface, FI (102), the FI (102) being in a signal path between the DU (100) and the RU (104), the method comprising:
selecting (S106) a plurality of identifiers to create one or more subgroups within an identifier group, the identifier group being represented by a group identifier, each identifier representing a processing entity in the RU (104);
creating (S108) the one or more subgroups within the identifier group; and
determining (S110) one or more section extensions usable by one or more control plane, C-plane, messages sent with the group identifier to specify one subgroup of the one or more subgroups, the one subgroup being associated to a C-plane section; and
transmitting the one or more C-plane messages to the RU (104).

2. The method of Claim 1, wherein one or more of:
the plurality of identifiers is a plurality of a plurality of extended antenna carrier identifiers, eAxC IDs;
the identifier group is an eAxC ID group; and
the group identifier is a group eAxC ID.

3. The method of Claim 2, wherein one or more of:
the group identifier is an eAxC ID representing a corresponding processing entity in the RU (104);
the RU (104) is an endpoint;
the eAxC ID is a representative eAxC ID for the identifier group; and
each processing entity in the RU (104) that is the endpoint identified by a corresponding eAxC ID is one processing entity for processing one user data layer.

4. The method of any one of Claims 1-3, wherein:
the identifier group being represented by the group identifier is defined in a management plane, M-plane, configuration; and
the M-plane configuration is configured by the DU (100).

5. The method of any one of Claims 1-4, wherein the method further includes:
performing one or more actions based on the one or more section extensions.

6. The method of Claim 5, wherein the one or more actions include one or more of:
transmitting a C-plane message to the RU (104);
performing scheduling for user data layers; and
composing control plane messages including section types and section extensions to convey scheduling information.

7. The method of any one of Claims 1-6, wherein the method further includes one or more of:
mapping a wireless device identifier of a plurality of wireless device identifiers to a port list index, the plurality of wireless device identifiers corresponding only to wireless devices that are in use;
mapping the port list index to a list entry of a configured post list, the list entry being mapped to a port list identifier; and
including mapping information associated with the wireless device identifier, the port list index, the list entry, and the port list identifier in the one or more section extensions.

8. The method of any one of Claims 1-7, wherein the one or more subgroups are specified by a set of indexes relative to positions in a first list of the eAxC IDs.

9. The method of any one of Claims 1-8, wherein the one or more section extensions includes one or both of:
a first section extension with a subgroup specified by a mask; and
a second section extension with the subgroup specified by a second list.

10. The method of Claim 9, wherein one or more of:
the first section extension includes a bitmask, a position of each bit of the bitmask representing a list index;
the second section extension includes a third list of indices, each index of the third list of indices representing a port list index ; and
the one or more section extensions are usable with section types associated with an open radio access network, O-RAN, fronthaul specification.

11. The method of any one of Claims 1-10, wherein the method further includes one or more of:
transferring common DMRS configuration parameters for one or more layers in at least one subgroup of the one or more subgroups from the DU (100) to the RU (104);
reporting measurement data for the one or more layers in the at least one subgroup; and
transmitting information of beamforming weights usable by the at least one subgroup of the processing entity to perform beamforming for a user data layer.

12. A network node (16), the network node (16) comprising a distributed unit, DU (100), the DU (100) being configured to communicate with a radio unit, RU (104), via a fronthaul interface, FI (102), the FI (102) being in a signal path between the DU (100) and the RU (104), the network node (16) being configured to perform the steps of any one of Claims 1-11.

13. A method in a network node (16), the network node (16) comprising a radio unit, RU (104), the RU (104) being configured to communicate with a distributed unit, DU (100), via a fronthaul interface, FI (102), the FI (102) being in a signal path between the DU (100) and the RU (104), the method comprising:
receiving (S112) one or more control plane, C-plane, messages from the DU (100), the one or more C-plane messages including one or more section extensions and a group identifier to specify one subgroup of one or more subgroups, the one subgroup being associated to a C-plane section, the one or more subgroups being created within an identifier group, the identifier group being represented by the group identifier, each identifier of the plurality of identifiers representing a processing entity in the RU (104), the plurality of identifiers being selected to create the one or more subgroups within an identifier group; and
determining (S114) a first configuration for a processing entity associated with the RU (104) based on the one or more C-plane messages; and
performing one or more actions based on the first configuration, the one or more actions include one or more of: (A) transmitting a C-plane message to the RU; (B) performing scheduling for user data layers; and (C) composing control plane messages including section types and section extensions to convey scheduling information.

14. The method of Claim 13, wherein one or more of:
the plurality of identifiers is a plurality of a plurality of extended antenna carrier identifiers, eAxC IDs;
the identifier group is an eAxC ID group; and
the group identifier is a group eAxC ID.

15. The method of Claim 14, wherein one or more of:
the group identifier is an eAxC ID representing a corresponding processing entity in the RU (104);
the RU (104) is an endpoint;
the eAxC ID is a representative eAxC ID for the identifier group; and
each processing entity in the RU (104) that is the endpoint identified by a corresponding eAxC ID is one processing entity for processing one user data layer.

16. The method of any one of Claims 13-15, wherein:
the identifier group being represented by the group identifier is defined in a second configuration, the second configuration being a management plane, M-plane, configuration; and
the second configuration is configured by the DU (100).

17. The method of any one of Claims 13-16, wherein the one or more subgroups are specified by a set of indexes relative to positions in a first list of the eAxC IDs.

18. The method of any one of Claims 13-17, wherein the one or more section extensions includes one or both of:
a first section extension with a subgroup specified by a mask; and
a second section extension with the subgroup specified by a second list.

19. The method of Claim 18, wherein one or more of:
the first section extension includes a bitmask, a position of each bit of the bitmask representing a list index;
the second section extension includes a third list of indices, each index of the third list of indices representing a port list index; and
the one or more section extensions are usable with section types associated with an open radio access network, O-RAN, fronthaul specification.

20. The method of any one of Claims 13-19, wherein the method further includes:
receiving common DMRS configuration parameters, from the DU (100), for one or more layers in at least one subgroup of the one or more subgroups.

21. A network node (16), the network node (16) comprising a radio unit, RU (104), the RU (104) being configured to communicate with a distributed unit, DU (100), via a fronthaul interface, FI (102), the FI (102) being in a signal path between the DU (100) and the RU (104), the network node (16) being configured to perform the steps of any one of Claims 13-20.

22. A system (10) comprising a first network node (16) and a second network node (16), the first network node (16) comprising a distributed unit, DU (100), the second network node (16) comprising a radio unit, RU (104), the DU (100) being configured to communicate with the RU (104) via a fronthaul interface, FI (102), the FI (102) being in a signal path between the DU (100) and the RU (104):
the first network node (16) being configured to:
select a plurality of identifiers to create one or more subgroups within an identifier group, the identifier group being represented by a group identifier, each identifier representing a processing entity in the RU (104);
create the one or more subgroups within the identifier group;
determine one or more section extensions usable by one or more control plane, C-plane, messages sent with a group identifier to specify one subgroup of the one or more subgroups, the one subgroup being associated to a C-plane section; and
transmit the one or more C-plane messages to the RU (104);
the second network node (16) being configured to:
receive the one or more control plane, C-plane, messages from the DU (100);
determine a first configuration for a processing entity associated with the RU (104) based on the one or more C-plane messages; and
perform one or more actions based on the first configuration, the one or more actions include one or more of: (A) transmitting a C-plane message to the RU; (B) performing scheduling for user data layers; and (C) composing control plane messages including section types and section extensions to convey scheduling information.

## Patentansprüche

1. Verfahren in einem Netzknoten (16), wobei der Netzknoten (16) eine verteilte Einheit, DU, (100) umfasst, wobei die DU (100) dazu konfiguriert ist, über eine Fronthaul-Schnittstelle, FI, (102) mit einer Funkeinheit, RU, (104) zu kommunizieren, wobei sich die FI (102) in einem Signalpfad zwischen der DU (100) und der RU (104) befindet, wobei das Verfahren umfasst:
Auswählen (S106) einer Mehrzahl von Identifikatoren zur Bildung einer oder mehrerer Untergruppen innerhalb einer Identifikatorgruppe, wobei die Identifikatorgruppe durch einen Gruppenidentifikator repräsentiert wird, wobei jeder Identifikator eine Verarbeitungsentität in der RU (104) repräsentiert;
Erzeugen (S108) der einen oder mehreren Untergruppen innerhalb der Identifikatorgruppe; und
Bestimmen (S110) einer oder mehrerer Abschnittserweiterungen, die von einer oder mehreren Nachrichten auf Steuerungsebene, C-Ebene, verwendbar sind, welche mit dem Gruppenidentifikator gesendet werden, um eine Untergruppe der einen oder mehreren Untergruppen zu spezifizieren, wobei die eine Untergruppe einem C-Ebene-Abschnitt zugeordnet ist; und
Übertragen der einen oder mehreren C-Ebene-Nachrichten an die RU (104).

2. Verfahren nach Anspruch 1, wobei eines oder mehrere zutreffen aus:
die Mehrzahl von Identifikatoren ist eine Mehrzahl einer Mehrzahl von erweiterten Antennenträger-Identifikatoren, eAxC-IDs;
die Identifikatorgruppe ist eine eAxC-ID-Gruppe; und
der Gruppenidentifikator ist eine Gruppen-eAxC-ID.

3. Verfahren nach Anspruch 2, wobei eines oder mehrere zutreffen aus:
der Gruppenidentifikator ist eine eAxC-ID, die eine entsprechende Verarbeitungsentität in der RU (104) repräsentiert;
die RU (104) ist ein Endpunkt;
die eAxC-ID ist eine repräsentative eAxC-ID für die Identifikatorgruppe; und
jede Verarbeitungsentität in der RU (104), die der durch eine entsprechende eAxC-ID identifizierte Endpunkt ist, ist eine Verarbeitungsentität zur Verarbeitung einer Nutzerdatenschicht.

4. Verfahren nach einem der Ansprüche 1 bis 3, wobei:
die durch den Gruppenidentifikator repräsentierte Identifikatorgruppe in einer Konfiguration auf Managementebene, M-Ebene, definiert ist; und
die M-Ebene-Konfiguration durch die DU (100) konfiguriert wird.

5. Verfahren nach einem der Ansprüche 1 bis 4, wobei das Verfahren ferner umfasst:
Ausführen einer oder mehrerer Aktionen basierend auf der einen oder den mehreren Abschnittserweiterungen.

6. Verfahren nach Anspruch 5, wobei die eine oder mehreren Aktionen eines oder mehrere umfassen aus:
Übertragen einer C-Ebene-Nachrichten an die RU (104).
Durchführen von Ressourcenplanung für Nutzerdatenschichten; und
Erstellen von Steuerungsebene-Nachrichten mit Abschnittstypen und Abschnittserweiterungen zur Übermittlung von Ressourcenplanungsinformationen.

7. Verfahren nach einem der Ansprüche 1 bis 6, wobei das Verfahren ferner eines oder mehrere umfasst aus:
Zuordnen eines Identifikators einer drahtlosen Vorrichtung aus einer Mehrzahl von Identifikatoren drahtloser Vorrichtungen, wobei die Mehrzahl von Identifikatoren drahtloser Vorrichtungen nur drahtlosen Vorrichtungen entspricht, die in Verwendung sind;
Zuordnen des Portlistenindex zu einem Listeneintrag einer konfigurierten Portliste, wobei der Listeneintrag einem Portlistenidentifikator zugeordnet wird; und
Aufnehmen von Zuordnungsinformationen, die sich auf den Vorrichtungsidentifikator, den Portlistenindex, den Listeneintrag und den Portlistenidentifikator beziehen, in die eine oder mehreren Abschnittserweiterungen.

8. Verfahren nach einem der Ansprüche 1 bis 7, wobei die eine oder mehreren Untergruppen durch eine Menge von Indizes relativ zu Positionen in einer ersten Liste der eAxC-IDs spezifiziert werden.

9. Verfahren nach einem der Ansprüche 1 bis 8, wobei der eine oder die mehreren Abschnittserweiterungen eines oder beides umfassen aus:
einer ersten Abschnittserweiterung mit einer durch eine Maske spezifizierten Untergruppe; und
einer zweiten Abschnittserweiterung mit der durch eine zweite Liste spezifizierten Untergruppe.

10. Verfahren nach Anspruch 9, wobei eines oder mehrere zutreffen aus:
die erste Abschnittserweiterung umfasst eine Bitmaske, wobei eine Position jedes Bits der Bitmaske einen Listenindex repräsentiert;
die zweite Abschnittserweiterung umfasst eine dritte Liste von Indizes, wobei jeder Index der dritten Liste von Indices einen Portlistenindex repräsentiert; und
die eine oder mehreren Abschnittserweiterungen sind mit Abschnittstypen verwendbar, die einer Fronthaul-Spezifikation eines offenen Funkzugangsnetzes, O-RAN, zugeordnet sind.

11. Verfahren nach einem der Ansprüche 1 bis 10, wobei das Verfahren ferner eines oder mehrere umfasst aus:
Übertragen gemeinsamer DMRS-Konfigurationsparameter für eine oder mehrere Schichten in mindestens einer Untergruppe der einen oder mehreren Untergruppen von der DU (100) zur RU (104);
Melden von Messdaten für die eine oder mehreren Schichten in der mindestens einen Untergruppe; und
Übertragen von Informationen über Strahlformungsgewichte, die von der mindestens einen Untergruppe der Verarbeitungsentität zur Durchführung der Strahlformung für eine Nutzerdatenschicht verwendbar sind.

12. Netzknoten (16), wobei der Netzknoten (16) eine verteilte Einheit, DU, (100) umfasst, wobei die DU (100) dazu konfiguriert ist, über eine Fronthaul-Schnittstelle, FI, (102) mit einer Funkeinheit, RU, (104) zu kommunizieren, wobei sich die FI (102) in einem Signalpfad zwischen der DU (100) und der RU (104) befindet, wobei der Netzknoten (16) dazu konfiguriert ist, die Schritte nach einem der Ansprüche 1 bis 11 auszuführen.

13. Verfahren in einem Netzknoten (16), wobei der Netzknoten (16) eine Funkeinheit, RU, (104) umfasst, wobei die RU (104) dazu konfiguriert ist, über eine Fronthaul-Schnittstelle, FI, (102) mit einer verteilten Einheit, DU, (100) zu kommunizieren, wobei sich die FI (102) in einem Signalpfad zwischen der DU (100) und der RU (104) befindet, wobei das Verfahren umfasst:
Empfangen (S112) einer oder mehrerer Nachrichten auf Steuerungsebene, C-Ebene, von der DU (100), wobei die eine oder mehreren C-Ebene-Nachrichten eine oder mehrere Abschnittserweiterungen und einen Gruppenidentifikator umfassen, um eine Untergruppe von einer oder mehreren Untergruppen zu spezifizieren, wobei die eine Untergruppe einem C-Ebene-Abschnitt zugeordnet ist, wobei die eine oder mehreren Untergruppen innerhalb einer Identifikatorgruppe erstellt werden, wobei die Identifikatorgruppe die durch den Gruppenidentifikator repräsentiert wird, wobei jeder Identifikator der Mehrzahl von Identifikatoren eine Verarbeitungsentität in der RU (104) repräsentiert, wobei die Mehrzahl von Identifikatoren ausgewählt wird, um die eine oder mehreren Untergruppen innerhalb der Identifikatorgruppe zu erstellen; und
Bestimmen (S114) einer ersten Konfiguration für eine Verarbeitungsentität, die der RU (104) zugeordnet ist, basierend auf der einen oder den mehreren C-Ebene-Nachrichten; und
Ausführen einer oder mehrerer Aktionen basierend auf der ersten Konfiguration, wobei die eine oder mehreren Aktionen eines oder mehrere umfassen aus: (A) Übertragen einer C-Ebene-Nachricht an die RU; (B) Durchführen von Ressourcenplanung für Nutzerdatenschichten; und (C) Erstellen von Steuerungsebene-Nachrichten, die Abschnittstypen und Abschnittserweiterungen umfassen, um Ressourcenplanungsinformationen zu übermitteln.

14. Verfahren nach Anspruch 13, wobei eines oder mehrere zutreffen aus:
die Mehrzahl von Identifikatoren ist eine Mehrzahl einer Mehrzahl von erweiterten Antennenträger-Identifikatoren, eAxC-IDs;
die Identifikatorgruppe ist eine eAxC-ID-Gruppe; und
der Gruppenidentifikator ist eine Gruppen-eAxC-ID.

15. Verfahren nach Anspruch 14, wobei eines oder mehrere zutreffen aus:
der Gruppenidentifikator ist eine eAxC-ID, die eine entsprechende Verarbeitungsentität in der RU (104) repräsentiert;
die RU (104) ist ein Endpunkt;
die eAxC-ID ist eine repräsentative eAxC-ID für die Identifikatorgruppe; und
jede Verarbeitungsentität in der RU (104), die der durch eine entsprechende eAxC-ID identifizierte Endpunkt ist, ist eine Verarbeitungsentität zur Verarbeitung einer Nutzerdatenschicht.

16. Verfahren nach einem der Ansprüche 13 bis 15, wobei:
die durch den Gruppenidentifikator repräsentierte Identifikatorgruppe in einer zweiten Konfiguration definiert ist, wobei die zweite Konfiguration eine Konfiguration auf Managementebene, M-Ebene, ist; und
die zweite Konfiguration durch die DU (100) konfiguriert wird.

17. Verfahren nach einem der Ansprüche 13 bis 16, wobei die eine oder mehreren Untergruppen durch eine Menge von Indizes relativ zu Positionen in einer ersten Liste der eAxC-IDs spezifiziert werden.

18. Verfahren nach einem der Ansprüche 13 bis 17, wobei der eine oder die mehreren Abschnittserweiterungen eines oder beides umfassen aus:
einer ersten Abschnittserweiterung mit einer durch eine Maske spezifizierten Untergruppe; und
einer zweiten Abschnittserweiterung mit der durch eine zweite Liste spezifizierten Untergruppe.

19. Verfahren nach Anspruch 18, wobei eines oder mehrere zutreffen aus:
die erste Abschnittserweiterung umfasst eine Bitmaske, wobei eine Position jedes Bits der Bitmaske einen Listenindex repräsentiert;
die zweite Abschnittserweiterung umfasst eine dritte Liste von Indizes, wobei jeder Index der dritten Liste von Indices einen Portlistenindex repräsentiert; und
die eine oder mehreren Abschnittserweiterungen sind mit Abschnittstypen verwendbar, die einer Fronthaul-Spezifikation eines offenen Funkzugangsnetzes, O-RAN, zugeordnet sind.

20. Verfahren nach einem der Ansprüche 13 bis 19, wobei das Verfahren ferner umfasst:
Empfangen gemeinsamer DMRS-Konfigurationsparameter von der DU (100) für eine oder mehrere Schichten in mindestens einer Untergruppe der einen oder mehreren Untergruppen.

21. Netzknoten (16), wobei der Netzknoten (16) eine Funkeinheit, RU, (104) umfasst, wobei die RU (104) dazu konfiguriert ist, über eine Fronthaul-Schnittstelle, FI, (102) mit einer verteilten Einheit, DU, (100) zu kommunizieren, wobei sich die FI (102) in einem Signalpfad zwischen der DU (100) und der RU (104) befindet, wobei der Netzknoten (16) dazu konfiguriert ist, die Schritte nach einem der Ansprüche 13 bis 20 auszuführen.

22. System (10), umfassend einen ersten Netzknoten (16) und einen zweiten Netzknoten (16), wobei der erste Netzknoten (16) eine verteilte Einheit, DU (100), umfasst und der zweite Netzknoten (16) eine Funkeinheit, RU (104), umfasst, wobei die DU (100) dazu konfiguriert ist, über eine Fronthaul-Schnittstelle, FI (102), mit der RU (104) zu kommunizieren, wobei sich die FI (102) in einem Signalpfad zwischen der DU (100) und der RU (104) befindet:
wobei der erste Netzknoten (16) dazu konfiguriert ist:
Auswählen einer Mehrzahl von Identifikatoren zur Bildung einer oder mehrerer Untergruppen innerhalb einer Identifikatorgruppe, wobei die Identifikatorgruppe durch einen Gruppenidentifikator repräsentiert wird, wobei jeder Identifikator eine Verarbeitungsentität in der RU (104) repräsentiert;
Erzeugen der einen oder mehreren Untergruppen innerhalb der Identifikatorgruppe;
Bestimmen einer oder mehrerer Abschnittserweiterungen, die von einer oder mehreren Nachrichten auf Steuerungsebene, C-Ebene, verwendbar sind, welche mit einem Gruppenidentifikator gesendet werden, um eine Untergruppe der einen oder mehreren Untergruppen zu spezifizieren, wobei die eine Untergruppe einem C-Ebene-Abschnitt zugeordnet ist; und
Übertragen der einen oder mehreren C-Ebene-Nachrichten an die RU (104);
wobei der zweite Netzknoten (16) dazu konfiguriert ist:
Empfangen der einen oder mehreren Nachrichten auf C-Ebene von der DU (100);
Bestimmen einer ersten Konfiguration für eine Verarbeitungsentität, die der RU (104) zugeordnet ist, basierend auf der einen oder den mehreren C-Ebene-Nachrichten; und
Ausführen einer oder mehrerer Aktionen basierend auf der ersten Konfiguration, wobei die eine oder mehreren Aktionen eines oder mehrere umfassen aus: (A) Übertragen einer C-Ebene-Nachricht an die RU; (B) Durchführen von Ressourcenplanung für Nutzerdatenschichten; und (C) Erstellen von Steuerungsebene-Nachrichten, die Abschnittstypen und Abschnittserweiterungen umfassen, um Ressourcenplanungsinformationen zu übermitteln.

## Revendications

1. Procédé dans un nœud de réseau (16), le nœud de réseau (16) comprenant une unité distribuée, DU (100), la DU (100) étant configurée pour communiquer avec une unité radio, RU (104), via une interface fronthaul, FI (102), la FI (102) étant dans un trajet de signal entre la DU (100) et la RU (104), le procédé comprenant :
la sélection (S106) d'une pluralité d'identifiants pour créer un ou plusieurs sous-groupes au sein d'un groupe d'identifiants, le groupe d'identifiants étant représenté par un identifiant de groupe, chaque identifiant représentant une entité de traitement dans la RU (104) ;
la création (S108) des un ou plusieurs sous-groupes au sein du groupe d'identifiants ; et
la détermination (S110) d'une ou plusieurs extensions de section utilisables par un ou plusieurs messages de plan de contrôle, plan C, envoyés avec l'identifiant de groupe pour spécifier ledit sous-groupe des un ou plusieurs sous-groupes, ledit sous-groupe étant associé à une section de plan C ; et
la transmission des un ou plusieurs messages de plan C à la RU (104).

2. Procédé selon la revendication 1, dans lequel un ou plusieurs parmi :
la pluralité d'identifiants est une pluralité d'une pluralité d'identifiants de porteuse d'antenne étendue, ID eAxC ;
le groupe d'identifiants est un groupe d'ID eAxC ; et
l'identifiant de groupe est un ID eAxC de groupe.

3. Procédé selon la revendication 2, dans lequel un ou plusieurs parmi :
l'identifiant de groupe est un ID eAxC représentant une entité de traitement correspondante dans la RU (104) ;
la RU (104) est un point d'extrémité ;
l'ID eAxC est un ID eAxC représentatif pour le groupe d'identifiants ; et
chaque entité de traitement dans la RU (104) qui est le point d'extrémité identifié par un ID eAxC correspondant est une entité de traitement pour traiter une couche de données utilisateur.

4. Procédé selon l'une quelconque des revendications 1 à 3, dans lequel :
le groupe d'identifiants étant représenté par l'identifiant de groupe est défini dans une configuration de plan de gestion, plan M ; et
la configuration de plan M est configurée par la DU (100).

5. Procédé selon l'une quelconque des revendications 1 à 4, le procédé incluant en outre :
la réalisation d'une ou plusieurs actions sur la base des une ou plusieurs extensions de section.

6. Procédé selon la revendication 5, dans lequel les une ou plusieurs actions incluent un ou plusieurs parmi :
la transmission d'un message de plan C à la RU (104) ;
la réalisation d'une planification pour des couches de données utilisateur ; et
la composition de messages de plan de contrôle incluant des types de section et des extensions de section pour acheminer des informations de planification.

7. Procédé selon l'une quelconque des revendications 1 à 6, le procédé incluant en outre un ou plusieurs parmi :
la mise en correspondance d'un identifiant de dispositif sans fil d'une pluralité d'identifiants de dispositif sans fil à un index de liste de ports, la pluralité d'identifiants de dispositif sans fil correspondant uniquement à des dispositifs sans fil qui sont en cours d'utilisation ;
la mise en correspondance de l'index de liste de ports à une entrée de liste d'une liste de ports configurée, l'entrée de liste étant mise en correspondance à un identifiant de liste de ports ; et
l'inclusion d'informations de mise en correspondance associées à l'identifiant de dispositif sans fil, à l'index de liste de ports, à l'entrée de liste et à l'identifiant de liste de ports dans les une ou plusieurs extensions de section.

8. Procédé selon l'une quelconque des revendications 1 à 7, dans lequel les un ou plusieurs sous-groupes sont spécifiés par un ensemble d'index relatifs à des positions dans une première liste des ID eAxC.

9. Procédé selon l'une quelconque des revendications 1 à 8, dans lequel les une ou plusieurs extensions de section incluent l'une ou les deux parmi :
une première extension de section avec un sous-groupe spécifié par un masque ; et
une seconde extension de section avec le sous-groupe spécifié par une deuxième liste.

10. Procédé selon la revendication 9, dans lequel un ou plusieurs parmi :
la première extension de section inclut un masque de bits, une position de chaque bit du masque de bits représentant un index de liste ;
la seconde extension de section inclut une troisième liste d'indices, chaque indice de la troisième liste d'indices représentant un index de liste de ports ; et
les une ou plusieurs extensions de section sont utilisables avec des types de section associés à une spécification fronthaul de réseau d'accès radio ouvert, O-RAN.

11. Procédé selon l'une quelconque des revendications 1 à 10, le procédé incluant en outre un ou plusieurs parmi :
le transfert de paramètres de configuration DMRS communs pour une ou plusieurs couches dans au moins un sous-groupe des un ou plusieurs sous-groupes provenant de la DU (100) à la RU (104) ;
le rapport de données de mesure pour les une ou plusieurs couches dans l'au moins un sous-groupe ; et
la transmission d'informations de poids de formation de faisceau utilisables par l'au moins un sous-groupe de l'entité de traitement pour réaliser un formage de faisceaux pour une couche de données utilisateur.

12. Nœud de réseau (16), le nœud de réseau (16) comprenant une unité distribuée, DU (100), la DU (100) étant configurée pour communiquer avec une unité radio, RU (104), via une interface fronthaul, FI (102), la FI (102) étant dans un trajet de signal entre la DU (100) et la RU (104), le nœud de réseau (16) étant configuré pour réaliser les étapes de l'une quelconque des revendications 1 à 11.

13. Procédé dans un nœud de réseau (16), le nœud de réseau (16) comprenant une unité radio, RU (104), la RU (104) étant configurée pour communiquer avec une unité distribuée, DU (100), via une interface fronthaul, FI (102), la FI (102) étant dans un trajet de signal entre la DU (100) et la RU (104), le procédé comprenant :
la réception (S112) d'un ou plusieurs messages de plan de contrôle, plan C, provenant de la DU (100), les un ou plusieurs messages de plan C incluant une ou plusieurs extensions de section et un identifiant de groupe pour spécifier ledit sous-groupe d'un ou plusieurs sous-groupes, ledit sous-groupe étant associé à une section de plan C, les un ou plusieurs sous-groupes étant créés au sein d'un groupe d'identifiants, le groupe d'identifiants étant représenté par l'identifiant de groupe, chaque identifiant de la pluralité d'identifiants représentant une entité de traitement dans la RU (104), la pluralité d'identifiants étant sélectionnée pour créer les un ou plusieurs sous-groupes au sein d'un groupe d'identifiants ; et
la détermination (S114) d'une première configuration pour une entité de traitement associée à la RU (104) sur la base des un ou plusieurs messages de plan C ; et
la réalisation d'une ou plusieurs actions sur la base de la première configuration, les une ou plusieurs actions incluent un ou plusieurs parmi : (A) la transmission d'un message de plan C à la RU ; (B) la réalisation d'une planification pour des couches de données utilisateur ; et (C) la composition de messages de plan de contrôle incluant des types de section et des extensions de section pour acheminer des informations de planification.

14. Procédé selon la revendication 13, dans lequel un ou plusieurs parmi :
la pluralité d'identifiants est une pluralité d'une pluralité d'identifiants de porteuse d'antenne étendue, ID eAxC ;
le groupe d'identifiants est un groupe d'ID eAxC ; et
l'identifiant de groupe est un ID eAxC de groupe.

15. Procédé selon la revendication 14, dans lequel un ou plusieurs parmi :
l'identifiant de groupe est un ID eAxC représentant une entité de traitement correspondante dans la RU (104) ;
la RU (104) est un point d'extrémité ;
l'ID eAxC est un ID eAxC représentatif pour le groupe d'identifiants ; et
chaque entité de traitement dans la RU (104) qui est le point d'extrémité identifié par un ID eAxC correspondant est une entité de traitement pour traiter une couche de données utilisateur.

16. Procédé selon l'une quelconque des revendications 13 à 15, dans lequel :
le groupe d'identifiants étant représenté par l'identifiant de groupe est défini dans une seconde configuration, la seconde configuration étant une configuration de plan de gestion, plan M ; et
la seconde configuration est configurée par la DU (100).

17. Procédé selon l'une quelconque des revendications 13 à 16, dans lequel les un ou plusieurs sous-groupes sont spécifiés par un ensemble d'index relatifs à des positions dans une première liste des ID eAxC.

18. Procédé selon l'une quelconque des revendications 13 à 17, dans lequel les une ou plusieurs extensions de section incluent l'une ou les deux parmi :
une première extension de section avec un sous-groupe spécifié par un masque ; et
une seconde extension de section avec le sous-groupe spécifié par une deuxième liste.

19. Procédé selon la revendication 18, dans lequel un ou plusieurs parmi :
la première extension de section inclut un masque de bits, une position de chaque bit du masque de bits représentant un index de liste ;
la seconde extension de section inclut une troisième liste d'indices, chaque indice de la troisième liste d'indices représentant un index de liste de ports ; et
les une ou plusieurs extensions de section sont utilisables avec des types de section associés à une spécification fronthaul de réseau d'accès radio ouvert, O-RAN.

20. Procédé selon l'une quelconque des revendications 13 à 19, le procédé incluant en outre :
la réception de paramètres de configuration DMRS communs, provenant de la DU (100), pour une ou plusieurs couches dans au moins un sous-groupe des un ou plusieurs sous-groupes.

21. Nœud de réseau (16), le nœud de réseau (16) comprenant une unité radio, RU (104), la RU (104) étant configurée pour communiquer avec une unité distribuée, DU (100), via une interface fronthaul, FI (102), la FI (102) étant dans un trajet de signal entre la DU (100) et la RU (104), le nœud de réseau (16) étant configuré pour réaliser les étapes de l'une quelconque des revendications 13 à 20.

22. Système (10) comprenant un premier nœud de réseau (16) et un second nœud de réseau (16), le premier nœud de réseau (16) comprenant une unité distribuée, DU (100), le second nœud de réseau (16) comprenant une unité radio, RU (104), la DU (100) étant configurée pour communiquer avec la RU (104) via une interface fronthaul, FI (102), la FI (102) étant dans un trajet de signal entre la DU (100) et la RU (104) :
le premier nœud de réseau (16) étant configuré pour :
sélectionner une pluralité d'identifiants pour créer un ou plusieurs sous-groupes au sein d'un groupe d'identifiants, le groupe d'identifiants étant représenté par un identifiant de groupe, chaque identifiant représentant une entité de traitement dans la RU (104) ;
créer les un ou plusieurs sous-groupes au sein du groupe d'identifiants ;
déterminer une ou plusieurs extensions de section utilisables par un ou plusieurs messages de plan de contrôle, plan C, envoyés avec un identifiant de groupe pour spécifier ledit sous-groupe des un ou plusieurs sous-groupes, ledit sous-groupe étant associé à une section de plan C ; et
transmettre les un ou plusieurs messages de plan C à la RU (104) ;
le second nœud de réseau (16) étant configuré pour :
recevoir les un ou plusieurs messages de plan de contrôle, plan C, provenant de la DU (100) ;
déterminer une première configuration pour une entité de traitement associée à la RU (104) sur la base des un ou plusieurs messages de plan C ; et
réaliser une ou plusieurs actions sur la base de la première configuration, les une ou plusieurs actions incluent un ou plusieurs parmi : (A) la transmission d'un message de plan C à la RU ; (B) la réalisation d'une planification pour des couches de données utilisateur ; et (C) la composition de messages de plan de contrôle incluant des types de section et des extensions de section pour acheminer des informations de planification.
